# EUROPEAN PATENT APPLICATION

(11) **EP 4 513 600 A1**
(43) Date of publication of application: **26.02.2025**
(21) Application number: 23791823.0
(22) Date of filing: 17.04.2023
(51) Int. Cl.: H01M 4/86, H01M 8/10

(54) **ELECTRODE CATALYST LAYER, MEMBRANE ELECTRODE JOINED BODY, AND SOLID POLYMER FUEL CELL**

(30) Priority: 21.04.2022 JP 2022070337; 15.07.2022 JP 2022114105
(71) Applicant: Toppan Holdings Inc., Tokyo 110-0016 (JP)
(72) Inventor: UENO Masahiro, Tokyo 110-0016 (JP); OZAWA Madoka, Tokyo 110-0016 (JP); MORIOKA Hiroyuki, Tokyo 110-0016 (JP); SUZUKI Yutaka, Tokyo 110-0016 (JP); KAWAMURA Atsuhiro, Tokyo 110-0016 (JP); INAGAWA Yuri, Tokyo 110-0016 (JP)
(74) Representative: Hoffmann Eitle
(86) International application number: PCT/JP2023/015309
(87) International publication number: WO 2023/204175

(57) **Abstract**

An electrode catalyst layer 10 that is used in a polymer electrolyte fuel cell comprises: a catalyst material 12; a conductive carrier 13 that supports the catalyst material 12; a polymer electrolyte 14; and a fibrous material 15 containing nitrogen atoms. The ratio of the number of nitrogen atoms to the total number of atoms of carbon, nitrogen, oxygen, fluorine, sulfur, and platinum obtained by energy-dispersive X-ray spectroscopy on a specific region of a cross-section of the electrode catalyst layer is 2 at% or more and 20 at% or less. The specific region is a region containing 50 area% or more of the fibrous material containing nitrogen atoms, and does not contain the catalyst material or the conductive carrier.

## Description

### [Technical Field]

The present invention relates to an electrode catalyst layer, a membrane electrode assembly, and a polymer electrolyte fuel cell.

### [Background Art]

### First Background

Fuel cells are power generation systems that produce electricity through a chemical reaction between hydrogen and oxygen. Fuel cells have features such as high efficiency, low environmental load, and low noise compared to conventional power generation systems, and are receiving attention as a future clean energy source. In particular, polymer electrolyte fuel cells that are usable near room temperature are regarded as promising for use as in-vehicle power sources and stationary power sources for domestic use, and a variety of research and development relating to polymer electrolyte fuel cells has been carried out in recent years. The problems facing practical use include a need to improve cell performance such as the power generation characteristics and durability, construction of infrastructure, and reduction of production costs.

Generally, polymer electrolyte fuel cells are formed by stacking a large number of single cells. A single cell has a structure in which a membrane electrode assembly, which has a fuel electrode (anode) that supplies a fuel gas and an oxygen electrode (cathode) that supplies an oxidant joined to the two sides of a polymer electrolyte membrane, is sandwiched between separators having gas flow paths and cooling water flow paths. The fuel electrode (anode) and the oxygen electrode (cathode) are mainly constituted by an electrode catalyst layer including a catalyst material such as a platinum group noble metal, a conductive carrier, and a polymer electrolyte, and a gas diffusion layer having both gas permeability and conductivity.

Polymer electrolyte fuel cells produce electricity through the following electrochemical reactions. First, in a fuel electrode-side electrode catalyst layer, the hydrogen contained in the fuel gas is oxidized by the catalyst material to generate protons and electrons. The generated protons pass through the polymer electrolyte in the electrode catalyst layer and the polymer electrolyte membrane that is in contact with the electrode catalyst layer, and reach an oxygen electrode-side electrode catalyst layer. Furthermore, the electrons generated at the same time pass through the conductive carrier in the fuel electrode-side electrode catalyst layer, the gas diffusion layer that is in contact with the fuel electrode-side electrode catalyst layer, a separator, and an external circuit, and reach the oxygen electrode-side electrode catalyst layer. Then, in the oxygen electrode-side electrode catalyst layer, the protons and the electrons react with the oxygen contained in an oxidant gas such as air to generate water. In this series of reactions, because the proton conduction resistance is greater than the electron conduction resistance, it is important for the proton conduction to be efficient to improve the reactivity and improve the performance as a fuel cell.

The gas diffusion layer serves the role of diffusing the gas supplied from the separator and supplying the gas into the electrode catalyst layer. Further, the pores in the electrode catalyst layer are provided in a location beyond the gas diffusion layer after flowing from the separator, and act as a path that transports a plurality of substances. The pores of the fuel electrode are required to have the function of smoothly supplying hydrogen contained in the fuel gas to a three-phase interface, which is a redox reaction field. Moreover, the pores of the oxygen electrode are required to have the function of smoothly supplying oxygen contained in the oxidant gas. In addition, the pores of the oxygen electrode are required to have the function of smoothly discharging generated water that is formed in the reaction. Here, in order to smoothly supply the gas and smoothly discharge the generated water, it is important that there are sufficient voids in the electrode catalyst layer that allow the generated water to be smoothly discharged, and that it does not have a dense structure.

As a means of controlling the structure of the electrode catalyst layer so as to not become dense, and improving the power generation performance, for example, an electrode catalyst layer has been proposed that contains carbon having different particle sizes, or carbon fibers (PTL 1 and 2).

In PTL 1, by combining carbon particles having appropriately different particle sizes, the electrode catalyst layer is prevented from becoming densely packed with carbon particles. Furthermore, in PTL 2, by including carbon fibers having different fiber lengths and setting the ratio of the fiber lengths to a certain range, the electrode catalyst layer has a large proportion of suitable pores. On the other hand, when large particles with a large particle size and small particles with a small particle size are mixed, the small particles may enter the voids between the large particles, resulting in even denser packing. Moreover, when the carbon material is only in particle form, cracks are likely to be induced in the catalyst layer, and the accompanying decrease in durability may pose a problem.

In addition, when carbon fibers are used as in PTL 2, even if dense packing can be prevented, because the proportion of the electron conductor in the catalyst layer increases and the proportion of the proton conductor decreases, the proton transfer resistance increases and becomes a factor in decreasing the power generation performance. The power generation performance of a fuel cell varies greatly depending on the material transport properties, the electron conductivity, and the proton conductivity, and ultimately, there is a limit to how much the power generation performance can be increased by a method that improves only the electron conductivity using a combination of carbon particles or a combination of carbon fibers.

### Second Background

The demand for generating cleaner energy is growing as a measure to combat the ever-increasing burden on the global environment. A fuel cell is a power generation system that generates electrical energy through a chemical reaction between hydrogen and oxygen that only discharges water, and there is a high expectation that fuel cells will serve as a future energy source.

A fuel cell is classified according to the type of electrolyte, as an alkali-type, phosphoric acid-type, polymer electrolyte-type, molten carbonate-type, solid oxide-type, and the like. Because polymer electrolyte fuel cells can be used near room temperature, they are expected to be used in a wide range of applications, such as in-vehicle power sources and domestic stationary power sources. For this reason, in order to commercialize polymer electrolyte fuel cells, research and development is being actively conducted to improve the power generation performance and durability, and to develop measures to reduce the cost.

A polymer electrolyte fuel cell includes a polymer electrolyte membrane having proton conductivity, a fuel electrode serving as the anode, and an air electrode serving as the cathode. The polymer electrolyte membrane is sandwiched between the fuel electrode and the air electrode in the thickness direction of the polymer electrolyte membrane. The fuel electrode has an electrode catalyst layer that separates a fuel gas into protons and electrons. The air electrode has an electrode catalyst layer that oxidizes the protons transported through the polymer electrolyte membrane with an oxidant containing oxygen, and receives electrons from an external circuit. The electrode catalyst layer of the fuel electrode and the air electrode contain a catalytic material such as a platinum-based noble metal, a carrier that supports the catalyst material, and a polymer electrolyte.

In a polymer electrolyte fuel cell, a single cell has a basic configuration in which a gas diffusion layer and a separator are arranged on a surface of the electrode catalyst layer of each of the fuel electrode and the air electrode on opposite sides of the polymer electrolyte membrane, and the polymer electrolyte fuel cell is formed by stacking a plurality of single cells. The gas diffusion layer has conductivity, and is a layer for uniformly diffusing a reactant gas. The separator is a member that has gas flow paths and cooling water flow paths, and also serves the role of extracting electrons to an external circuit, and is arranged on the outside of the gas diffusion layer. Hereinafter, a structure in which a fuel electrode and an air electrode are formed on two sides of a polymer electrolyte membrane will be referred to as a membrane electrode assembly.

In a polymer electrolyte fuel cell, a fuel gas containing hydrogen is supplied to the fuel electrode, and an oxidant gas containing oxygen is supplied to the air electrode, and power is generated due to the electrode reactions shown in equations 1 and 2 at the fuel electrode and the air electrode.

Fuel electrode: H2 → 2H+ + 2e- (equation 1)

Air electrode: 1/2 O2 + 2H+ + 2e- → H2O (equation 2)

As shown in equation 1, the fuel gas supplied to the fuel electrode is separated into protons and electrons by a catalyst material contained in the electrode catalyst layer. The separated protons migrate through a humidified polymer electrolyte contained in the electrode catalyst layer of the fuel electrode and the polymer electrolyte membrane to the air electrode. The separated electrons are extracted from the fuel electrode to an external circuit, and migrate through the external circuit to the air electrode. As shown in equation 2, at the air electrode, the oxidant gas reacts with the protons and electrons that have migrated from the fuel electrode to generate water. An electric current is generated as a result of the electrons migrating through the external circuit.

In addition, the electrode catalyst layer of the fuel cell is generally formed as a thin film having a thickness of 100 µm or less, and a problem referred to as cracking, in which cracking occurs in the electrode catalyst layer during production, has been cited as a problem. When cracks occur, the proton conduction pathways and the electron conduction pathways in the electrode catalyst layer become blocked, resulting in a decrease in the power generation performance and durability. In order to solve this problem, a technique that improves the joining strength of the electrode catalyst layer is disclosed in PTL 3.

In PTL 3, a fibrous material such as hydrophilic carbon whiskers is added to the electrode catalyst layer to improve the joining strength of the electrode catalyst layer.

### [Citation List]

### [Patent Literature]

PTL 1: JP 3617237 B
PTL 2: JP 5537178 B
PTL 3: JP 4065862 B

### [Summary of the Invention]

### [Technical Problem]

### First Problem

The present disclosure has been made with a focus on the points described above in the first background, and an object of the present disclosure is to provide an electrode catalyst layer, a membrane electrode assembly, and a polymer electrolyte fuel cell, which are capable of improving the material transport properties and proton conductivity in the electrode catalyst layer, and which are capable of exhibiting high power generation performance with good durability.

### Second Problem

The conventional fuel cell using the electrode catalyst layer disclosed in Patent Document 3 had room for improvement from the viewpoint of the initial power generation performance.

When a fibrous material is added to the electrode catalyst layer, because protons cannot be conducted by the fibrous material, the proton conduction resistance inside the electrode catalyst layer increases, and the power generation performance of the membrane electrode assembly can sometimes decrease. In particular, under low humidity conditions, a decrease in the water content of the polymer electrolyte may result in a significant increase in the proton conduction resistance. On the other hand, when the ratio of the polymer electrolyte in the electrode catalyst layer is increased in order to improve the proton conductivity, the electron conductivity in the electrode catalyst layer is not ensured, or water discharged during power generation at high current density cannot be expelled from the system due to water retention by the polymer electrolyte, which results in a decrease in the power generation performance. As a result, it is necessary for the power generation performance to be exhibited while suppressing the amount of the polymer electrolyte in the catalyst layer to a small amount. Therefore, it is important to appropriately construct proton conduction pathways inside the electrode catalyst layer to which the fibrous material has been added.

After intensive investigation, the inventors measured the amount of the polymer electrolyte present around the fibrous material in the electrode catalyst layer, and found that the presence of a certain amount or more of the polymer electrolyte around the fibrous material makes it possible to appropriately construct the proton conduction pathways in the electrode catalyst layer, and enables the problems described above to be solved.

An object of an aspect of the present disclosure is to provide an electrode catalyst layer, a membrane electrode assembly, and a polymer electrolyte fuel cell having superior initial power generation performance from a low current density region to a high current density region.

### [Solution to Problem]

### First Invention Group A

[1] An electrode catalyst layer that is used in a polymer electrolyte fuel cell, the electrode catalyst layer comprising: a catalyst material; a conductive carrier that supports the catalyst material; a polymer electrolyte; and a fibrous material containing nitrogen atoms; wherein
   a ratio of the number of nitrogen atoms to a total number of atoms of carbon, nitrogen, oxygen, fluorine, sulfur, and platinum obtained by energy-dispersive X-ray spectroscopy on a specific region of a cross-section of the electrode catalyst layer is 2 at% or more and 20 at% or less, and the specific region is a region containing 50 area% or more of the fibrous material containing nitrogen atoms, and does not contain the catalyst material or the conductive carrier.
[2] The electrode catalyst layer according to [1], wherein an average fiber diameter of the fibrous material containing nitrogen atoms is 50 nm or more and 400 nm or less.
[3] The electrode catalyst layer according to [1] or [2], wherein the fibrous material containing nitrogen atoms is a polymer fiber.
[4] The electrode catalyst layer according to [3], wherein the fibrous material containing nitrogen atoms has an azole structure.
[5] The electrode catalyst layer according to any one of [1] to [4], wherein a peak of a fiber diameter distribution of the fibrous material containing nitrogen atoms is 150 nm or more and 250 nm or less.
[6] The electrode catalyst layer according to any one of [1] to [5], wherein a content of the fibrous material containing nitrogen atoms in the electrode catalyst layer is 1 wt% or more and 10 wt% or less.
[7] The electrode catalyst layer according to any one of [1] to [6], wherein a thickness of the electrode catalyst layer is 2 µm or more and 10 µm or less.
[8] A membrane electrode assembly comprising the electrode catalyst layer according to any one of [1] to [7] provided on at least one surface of a polymer electrolyte membrane.
[9] A polymer electrolyte fuel cell comprising the membrane electrode assembly according to [8].

### Second Invention Group B

An aspect of the present disclosure is an electrode catalyst layer that is joined to a polymer electrolyte membrane, the electrode catalyst layer including: a catalyst; a polymer electrolyte containing fluorine; and a fibrous material; wherein a ratio of the number of fluorine atoms to a total number of atoms of carbon, nitrogen, oxygen, fluorine, sulfur, and platinum obtained by energy-dispersive X-ray spectroscopy on a specific region of a cross-section of the electrode catalyst layer is 0.2 at% or more, and the specific region is a region containing 50 area% or more of the fibrous material, and does not contain the catalyst.

In one mode, the fibrous material may have an azole structure.

In one mode, a carrier may be included that supports the catalyst and constitutes catalyst supporting particles together with the catalyst, wherein a content of the fibrous material is 5 parts by mass or more and 20 parts by mass or less when a content of the carrier is 100 parts by mass, and the specific region is a region that does not contain the carrier.

In one mode, the polymer electrolyte may cover at least a portion of a surface of the fibrous material. A thickness of the polymer electrolyte covering the fibrous material may be 3 nm or more and 30 nm or less.

In one mode, the polymer electrolyte may contain proton-donating groups, and a dry weight per mole of the proton-donating groups of the polymer electrolyte may be 600 g/mol or more and 1,200 g/mol or less.

In one mode, an average fiber length of the fibrous material may be 0.7 µm or more and 40 µm or less. An average fiber diameter of the fibrous material may be 10 nm or more and 500 nm or less.

In one mode, the fibrous material may have a function of adsorbing the polymer electrolyte. An adsorption capacity of the fibrous material for the polymer electrolyte may be 10 mg/g or more.

Another aspect of the present disclosure is a membrane electrode assembly including: a polymer electrolyte membrane; and the electrode catalyst layer described above; wherein the electrode catalyst layer is joined to the polymer electrolyte membrane.

Yet another aspect of the present disclosure is a polymer electrolyte fuel cell including: the membrane electrode assembly described above; a pair of gas diffusion layers that sandwich the membrane electrode assembly in a thickness direction of the membrane electrode assembly; and a pair of separators that sandwich the membrane electrode assembly and the pair of gas diffusion layers in the thickness direction of the membrane electrode assembly.

### [Advantageous Effects of the Invention]

According to the first invention group A, which is a mode of the present disclosure, it is possible to provide an electrode catalyst layer, a membrane electrode assembly, and a polymer electrolyte fuel cell, which are capable of improving the material transport properties and proton conductivity in the electrode catalyst layer, and which are capable of exhibiting high power generation performance and good durability.

According to the second invention group B, which is a mode of the present disclosure, an electrode catalyst layer, a membrane electrode assembly, and a polymer electrolyte fuel cell are provided that have superior initial power generation performance from a low current density region to a high current density region.

### [Brief Description of the Drawings]

Fig. 1 is a cross-sectional view schematically showing an example of a cross-sectional structure of an electrode catalyst layer according to a first invention group of the present disclosure.
Fig. 2 is a schematic diagram showing an example of a cross-section of the electrode catalyst layer according to the first invention group, and an example of a cross-section of a first electrode catalyst layer according to a second invention group.
Fig. 3 is an explanatory diagram of a fiber diameter distribution of fibers according to the first invention group.
Fig. 4 is an explanatory diagram of a fiber diameter of a fiber according to the first invention group.
Fig. 5 shows a configuration example of a membrane electrode assembly according to the present embodiment of the first invention group, where Fig. 5(a) is a plan view of the membrane electrode assembly when viewed from an oxygen electrode side of an electrode catalyst layer, and Fig. 5(b) is a cross-sectional view taken along line X-X' inFig. 5(a).
Fig. 6 is an exploded perspective view showing a configuration example of a polymer electrolyte fuel cell according to the first invention group.
Fig. 7 is a cross-sectional view showing a structure of a membrane electrode assembly according to an embodiment of the second invention group.
Fig. 8 is a schematic view schematically showing the structure of a first electrode catalyst layer according to an embodiment of the second invention group.
Fig. 9 is a cross-sectional view schematically showing the structure of catalyst supporting particles contained in the first electrode catalyst layer according to an embodiment of the second invention group.
Fig. 10 is an exploded perspective view showing a configuration of a polymer electrolyte fuel cell according to an embodiment of the second invention group.

### [Description of the Embodiment]

### First Invention Group

An embodiment of the present disclosure will be described below with reference to the drawings. It should be noted that the present disclosure is not limited to the following embodiment, and design modifications can be made on the basis of the knowledge of a person skilled in the art, and such modifications are also included in the scope of the present disclosure. In addition, the drawings are exaggerated as appropriate to facilitate understanding.

As a result of intensive investigation of the initial power generation performance and the durable power generation performance of polymer electrolyte fuel cells, the inventors of the present disclosure have found that the performance is significantly affected by the gas diffusion properties and the proton conductivity of the electrode catalyst layer. Further, by using a fibrous material containing nitrogen atoms in the electrode catalyst layer, improving the gas diffusion properties and lowering the proton conduction resistance by forming large voids, and also setting the ratio of the number of nitrogen atoms to the total number of atoms of carbon, nitrogen, oxygen, fluorine, sulfur, and platinum obtained by energy-dispersive X-ray spectroscopy on a specific region of a cross-section of the electrode catalyst layer to 2 at% or more and 20 at% or less, the inventors succeeded in obtaining a polymer electrolyte fuel cell that exhibits high power generation performance and superior durability.

In addition, the inventors also found that, when the peak of the fiber diameter distribution of the fibrous material is 150 nm or more and 250 nm or less, the proton conduction resistance is reduced without a loss in conductivity, and the gas diffusion properties are improved. As a result, a decrease in output and deterioration of the electrode catalyst layer are inhibited, and the inventors succeeded in obtaining a polymer electrolyte fuel cell that exhibits high power generation performance over a long period of time.

### [Configuration of Electrode Catalyst Layer]

Hereinafter, a specific configuration of the electrode catalyst layer according to the present embodiment will be described with reference to the drawings.

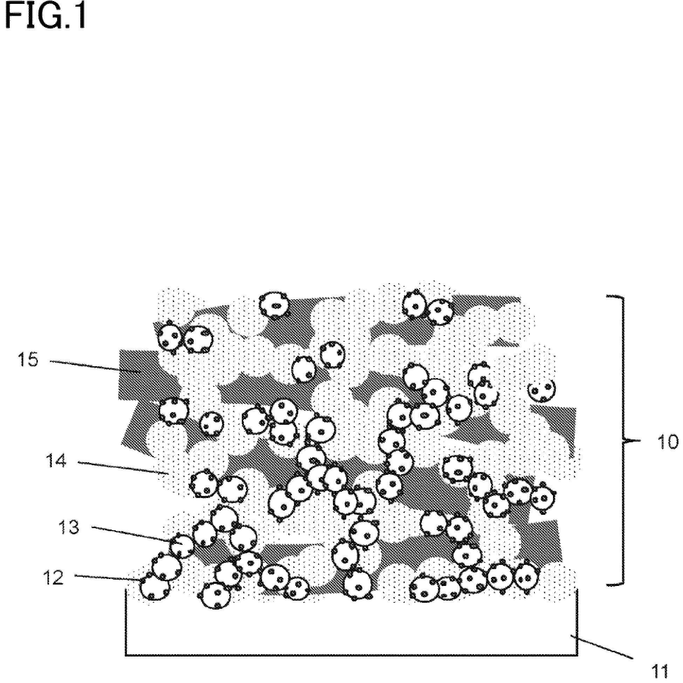

As illustrated in the schematic diagram shown in Fig. 1, the electrode catalyst layer 10 according to the present embodiment is joined to the surface of a polymer electrolyte membrane 11, and includes a catalyst material 12, a conductive carrier 13 that supports the catalyst material 12, a polymer electrolyte 14, and a fibrous material 15 containing nitrogen atoms. Further, voids 4 are formed in the portions where none of the above components are present.

The fibrous material 15 contained in the electrode catalyst layer 10 according to the present embodiment is a fibrous material containing nitrogen atoms. An example of a fiber containing nitrogen atoms is a polymer fiber containing nitrogen atoms. The nitrogen atoms of the fibrous material preferably constitute a Lewis basic group having an unshared electron pair.

The fibrous material containing nitrogen atoms preferably has an azole structure. An azole structure refers to a five-membered heterocyclic structure containing one or more nitrogen atoms, and examples include an imidazole structure, an oxazole structure, and a thiazole structure. Furthermore, the fibrous material containing nitrogen atoms preferably has a benzoazole structure, such as a benzimidazole structure or a benzoxazole structure. Specific examples of the fibrous material containing nitrogen atoms include polyazole polymers such as polybenzimidazole and polybenzoxazole.

In addition, the fibrous material containing nitrogen atoms may be a polymer having a pyrrole ring structure or a pyridine ring structure.

When the fibrous material contains nitrogen atoms, an interaction can be made to occur between the unshared electron pair of the nitrogen atoms and the protons of the polymer electrolyte. Consequently, the proton conductivity in the electrode catalyst layer 10 is improved, and the output characteristics can be improved. For example, it becomes possible to cover the fibrous material with a film of the polymer electrolyte, and it becomes possible to simultaneously improve the material transport properties and the proton conductivity in the electrode catalyst layer 10.

As a result of the fibrous material being a polymer, the flexibility is increased, and the strength of the electrode catalyst layer 10 is improved. In addition, the introduction of nitrogen improves the thermal stability of the electrode catalyst layer 10.

Moreover, the electrode catalyst layer 10 preferably has a content of the fibrous material 15 in the electrode catalyst layer 10 of 1 wt% or more and 10 wt% or less. When the content of the fibrous material 15 is lower than the above range, the voids 4 become small, which can prevent sufficient water drainage properties and gas diffusion properties from being ensured. In addition, cracks can occur in the electrode catalyst layer 10, resulting in a reduction in the durability. When the content of the fibrous material 15 is higher than the above range, the proton conduction pathways through the polymer electrolyte 14 can become blocked, resulting in an increase in the resistance.

In the present embodiment, the ratio of the number of nitrogen atoms to the total number of atoms of carbon, nitrogen, oxygen, fluorine, sulfur, and platinum obtained by energy-dispersive X-ray (EDX) spectroscopy on a specific region of a cross-section of the electrode catalyst layer is 2 at% or more and 20 at% or less. The specific region is a cross-section of the electrode catalyst layer, and is a region that includes 50 area% or more of the fibrous material containing nitrogen atoms, and does not contain the catalyst material and the conductive carrier. The shape of the region (observation area) can have a rectangular shape (including a square shape), and, for example, is a square shape of 150 nm × 150 nm. In the specific region, the fibrous material containing nitrogen atoms may account for 100% of the area. It is sufficient for one specific region to be in the cross-section.

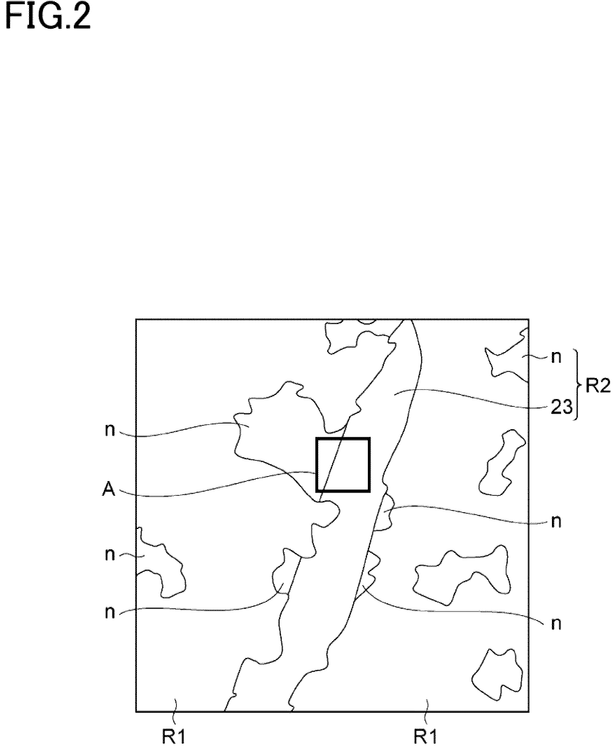

Fig. 2 is schematic diagram showing an example of a cross-section of the electrode catalyst layer. The cross-section of the electrode catalyst layer is composed of a region R1 that includes the catalyst material and the conductive carrier, and a region R2 that does not contain the catalyst material and the conductive carrier. The region R2 is composed of a fibrous material 23 containing nitrogen atoms, and a region n that does not contain the fibrous material 23 containing nitrogen atoms. In Fig. 2, the specific region mentioned above (observation area) is represented by A, and includes only the region R2, and does not include the region R1. The shape of the region (observation area) can have a rectangular shape (including a square shape), and, for example, is a square shape of 150 nm × 150 nm. In the specific region, the fibrous material 23 containing nitrogen atoms may account for 100% of the area. It is sufficient for one specific region to be in the cross-section.

The composition ratio of elements in the specific region can be measured by, for example, performing element mapping using a transmission electron microscope equipped with an energy-dispersive X-ray spectrometer (TEM-EDX). The acceleration voltage of X-rays in the EDX is preferably 200 kV. Such an acceleration voltage allows the electron beam to penetrate to about a nm level thickness in the specific region, and information about the fibers and the elements around the fibers can be obtained.

A nitrogen atomic ratio of less than 2 at% in the EDX analysis of the specific region indicates that the density level of the fibers is too low. A nitrogen atomic ratio of greater than 20 at% in the EDX analysis of the specific region indicates that the density level of the fiber is too high. A nitrogen atomic ratio of 2 at% to 20 at% in the EDX analysis of the specific region indicates that the density of the fiber is appropriate.

If the level of close packing of the fibers is too low, the interaction between the fibers containing nitrogen and ions such as the sulfonic acid groups of the polymer electrolyte become weak, and the proton conduction pathways become insufficient, which tends to increase the resistance. Furthermore, if the level of close packing of the fibers is too high, the entanglement or aggregation of the fibers with each other closes the voids, which can prevent sufficient water drainage properties and gas diffusion properties from being ensured.

As a result of appropriately setting the level of close packing of the fibers, the unshared electron pairs of the nitrogen atoms and the protons of the polymer electrolyte interact, which improves the proton conductivity in the electrode catalyst layer and improves the output characteristics.

The method of exposing the cross-section is the same as in the observation of the thickness of the electrode catalyst layer 10 described below.

The weight ratio of the fibrous material 15 contained in the electrode catalyst layer 10 can be obtained from a ratio between the weight after removal of the contained materials other than the relevant material by a chemical procedure or an electrochemical procedure, and the weight before the removal procedure. For example, the catalyst material can be dissolved by an acid such as aqua regia that contains a strong oxidant, and the conductive carrier can be burned off by a high potential. Furthermore, the polymer electrolyte and the polymer electrolyte membrane can be decomposed by hydrogen peroxide or the like.

The average fiber diameter of the fibrous material 15 contained in the electrode catalyst layer 10 according to the present embodiment is preferably 50 nm or more and 400 nm or less. As a result of setting the fiber diameter in this range, the voids 4 in the electrode catalyst layer 10 can be increased, and a decrease in the proton conductivity can be suppressed, which enables the output to be increased. When the average fiber diameter of the fibrous material 15 is smaller than the above range, the fibrous material closes the voids, which can prevent sufficient water drainage properties and gas diffusion properties from being ensured. Because the fibrous material does not have electron conductivity, the electron conductivity decreases as the addition amount is increased. As the fiber diameter is made thinner, the number of fibers increases for the same addition weight, and the surface area also increases, which enables the effects described above to be achieved over a wider range of catalyst layers. Therefore, a thinner fibrous material is preferable. On the other hand, the size of the voids that can naturally occur when aggregates of the catalyst support particles coagulate to form agglomerates is about 50 nm. Therefore, if the fiber diameter is 50 nm or less, the voids may become blocked, which may result in a decrease in water drainage properties. Furthermore, when the average fiber diameter of the fibrous material 15 is larger than the above range, the conduction of electrons and protons by the conductive carrier 13 and the polymer electrolyte 14 can become inhibited, which increases the resistance.

In addition, the fiber length of the fibrous material 15 is preferably 1 µm or more and 80 µm, and is more preferably 5 µm or more and 70 µm or less. As a result of setting the fiber length to the above range, the strength of the electrode catalyst layer 10 can be increased, and by extension, it is possible to suppress the occurrence of cracks in the electrode catalyst layer 10 when the electrode catalyst layer 10 is formed.

The fiber diameter of the fibrous material 15 is obtained by measuring, for example, the diameter of the fibrous material 15 that is exposed in a cross-section of the electrode catalyst layer 10 when the cross-section is observed using a scanning electron microscope (SEM). When the fibrous material 15 is cut diagonally, the shape of the exposed cross-section can sometimes be an oval shape. In this case, the fiber diameter of the fibrous material 15 can be obtained by measuring the diameter of a perfect circle fitted along the short axis. The average fiber diameter can be obtained by measuring the fiber diameter of the fibrous material 15 at a plurality of locations, such as 20 locations, and then calculating the arithmetic mean.

In the present embodiment, it is preferable that the peak of the fiber diameter distribution of the fibrous material 15 containing nitrogen that is contained in the electrode catalyst layer 10 is 150 nm or more and 250 nm or less. When the fiber diameter of the fibrous material is lower than the above range, the voids become small, which can prevent sufficient water drainage properties and gas diffusion properties from being ensured. In this case, water can remain in the electrode catalyst layer 10, which promotes a decrease in output and deterioration of the electrode catalyst layer. When the fiber diameter of the fibrous material is higher than the above range, the proton conduction pathways through the polymer electrolyte 14 and the electron conduction pathways through the conductive carrier 13 can become blocked, which increases the resistance.

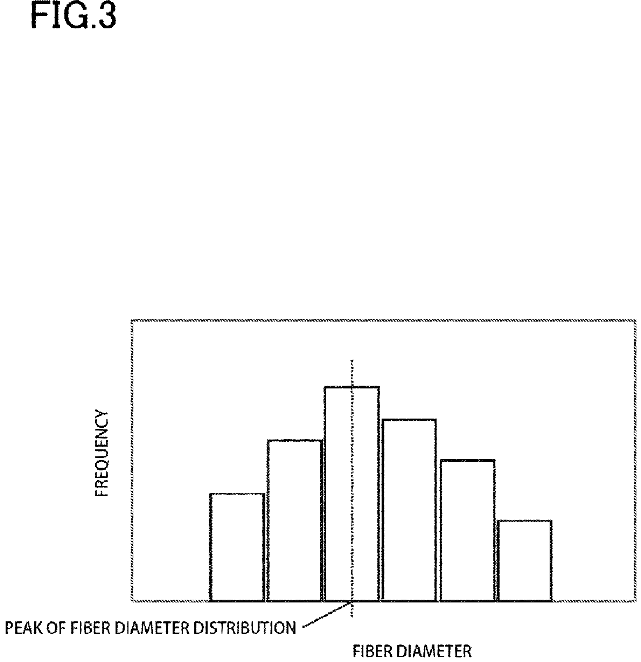

Here, the peak of the fiber diameter distribution of the fibrous material mentioned above will be described. Fig. 3 is an explanatory diagram of a fiber diameter distribution of the fibrous material. The graph is a histogram showing the frequency of each fiber diameter of the fibrous material contained in the electrode catalyst layer 10, and shows the distribution of the fiber diameters. Histograms are commonly used to look at the distribution of quantitative data. A histogram is a graph created by dividing the data into a number of classes, creating a frequency distribution table, and then plotting the classes of the data on the horizontal axis and the number of data points in each class on the vertical axis.

In the present embodiment, the histogram is created with a class width of 10 nm. For example, if the maximum value of the fiber diameter that has been obtained is 298 nm and the minimum value is 102 nm, and when the class width of the histogram is 10 nm, the smallest class becomes "100 nm or more and less than 110 nm" and the largest class becomes "290 nm or more and less than 300 nm". The number of classes (the number of columns in the histogram) is 20. In this case, each class of the histogram is expressed as "100+(n-1)×10 nm or more and less than 100+n×10 nm" (where n = 1 to 20). In this way, by determining the classes and creating a frequency distribution table of the measured fiber diameters, a histogram representing the fiber diameter distribution is obtained. Furthermore, the peak of the fiber diameter distribution refers to the central value of the class whose frequency is highest in the frequency distribution table and the histogram. For example, in a fiber diameter histogram of the fibrous material contained in the electrode catalyst layer 10, if the frequency of the class of 200 nm or more and less than 210 nm has the highest frequency, the peak of the fiber diameter distribution of the fibrous material is 205 nm.

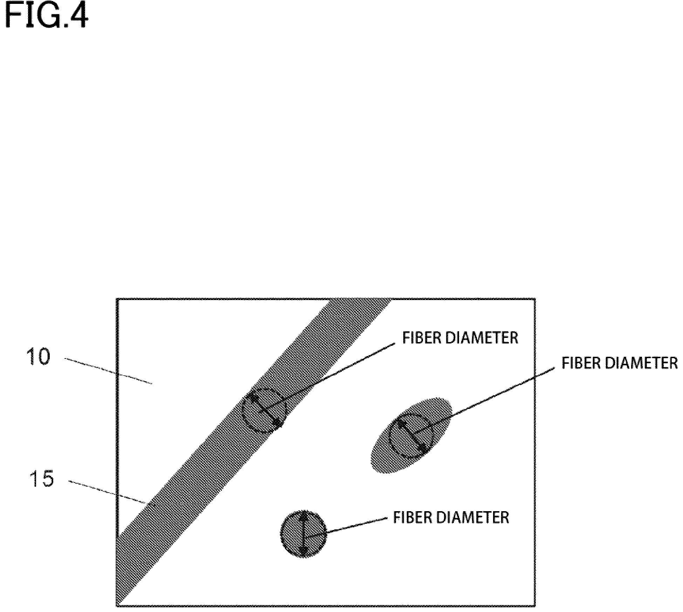

For example, as shown in Fig. 4, the fiber diameter of the fibrous material is obtained by measuring the diameter of the fibrous material that is exposed when a cross-section of the electrode catalyst layer 10 is observed using a scanning electron microscope (SEM). When the fibrous material is cut diagonally, the shape of the exposed cross-section may be an oval shape. In this case, the fiber diameter can be obtained by measuring the diameter of a perfect circle fitted along the short axis. Furthermore, the surface of the fibrous material can sometimes be exposed rather than the cross-section of the fibrous material. In this case, the fiber diameter can be obtained by measuring the width of the fiber perpendicular to the long axis of the exposed fibrous material. A histogram representing the frequency of each fiber diameter can be obtained by measuring the fiber diameter of a plurality of fibrous materials. A larger number of measurement points of the fiber diameter can allow the peak of the fiber diameter to be more clearly determined. In order to determined the fiber diameter distribution of the fibrous material within the electrode catalyst layer 10 without bias, it is preferable to perform similar measurements with respect to at least 20 or more observation points. The observation magnification of the scanning electron microscope (SEM) is preferably about 50,000 times or more such that the contours of the fibrous material can be clearly confirmed and the fiber diameter can be accurately measured.

The method of exposing the cross-section of the electrode catalyst layer 10 includes, for example, known methods such as ion milling and ultramicrotomy. When performing the processing that exposes the cross-section, in order to reduce the damage to the polymer electrolyte membrane 11 and the polymer electrolyte 14 that constitutes the electrode catalyst layer 10, it is particularly preferable to use cryo-ion milling which performs processing while cooling the electrode catalyst layer 10.

The thickness of the electrode catalyst layer 10 is preferably 30 µm or less. If the thickness is more than 30 µm, cracks are likely to occur, and when used in a fuel cell, the diffusion properties of the gas and the generated water, and the conductivity may decrease, resulting in a decrease in output. The thickness may be 10 µm or less.

The thickness of the electrode catalyst layer 10 is preferably 2 µm or more. If the thickness is greater than 10 µm, cracks are likely to occur, and when used in a fuel cell, the diffusion properties of the gas and the generated water, and the conductivity, decrease, resulting in a decrease in output. The thickness of the electrode catalyst layer 10 may be 5 µm or more.

The thickness of the electrode catalyst layer 10 can be measured by, for example, observing the cross-section of the catalyst layer 10 using a scanning electron microscope (SEM). The method of exposing the cross-section of the electrode catalyst layer 10 includes, for example, known methods such as ion milling and ultramicrotomy. When performing the processing that exposes the cross-section, in order to reduce the damage to the polymer electrolyte membrane 11 and the polymer electrolyte 14 that constitutes the electrode catalyst layer 10, it is particularly preferable to use cryo-ion milling which performs processing while cooling the electrode catalyst layer 10. For example, the thickness of the electrode catalyst layer can be measured by performing measurement within a field of view that includes the entire electrode catalyst layer at an observation magnification of about 1,000 to 10,000 times. In order to determine the thickness within the catalyst layer without bias, it is preferable to perform the same measurement with respect to at least 20 or more observation points.

Examples of the catalyst material 12 include metals included in the platinum group, metals other than those in the platinum group, and alloys, oxides, composite oxides, and carbides of these metals. The metals included in the platinum group are platinum, palladium, ruthenium, iridium, rhodium, and osmium. Examples of metals other than the platinum group metals include iron, lead, copper, chromium, cobalt, nickel, manganese, vanadium, molybdenum, gallium, and aluminum.

As the conductive carrier 13, it is possible to use a carrier that has conductivity and can support the catalyst material 12 without being corroded by the catalyst material 12. It is possible to use carbon particles as the conductive carrier 13. Examples of the carbon particles include carbon black, graphite, black lead, activated carbon, carbon nanotubes, carbon nanofibers, and fullerenes. The carbon particles preferably have a particle size of about 10 nm or more and 1,000 nm or less, and more preferably have a particle size of about 10 nm or more and 100 nm or less. As a result of the particle size being 10 nm or more, the carbon particles do not become packed in the electrode catalyst layer 10 too densely, which suppresses the reduction in the gas diffusion properties of the electrode catalyst layer 10. As a result of the particle size being 1,000 nm or less, the occurrence of cracks in the electrode catalyst layer 10 is suppressed. The particle size of the carbon particles is the volume average diameter determined by laser diffraction/scattering.

An electrolyte having proton conductivity can be used for the polymer electrolyte membrane 11 and the polymer electrolyte 14 contained in the electrode catalyst layer 10. For the polymer electrolyte, for example, a fluorine-based polymer electrolyte and a hydrocarbon-based polymer electrolyte can be used. A polymer electrolyte having a tetrafluoroethylene skeleton can be used as the fluorine-based polymer electrolyte. Note that Nafion (registered trademark) manufactured by DuPont is an example of a polymer electrolyte having a tetrafluoroethylene skeleton. Examples of the hydrocarbon-based polymer electrolyte include sulfonated polyether ketones, sulfonated polyether sulfones, sulfonated polyether ether sulfones, sulfonated polysulfides, and sulfonated polyphenylenes.

The polymer electrolyte contained in the polymer electrolyte membrane 11 and the polymer electrolyte 14 contained in the electrode catalyst layer 10 may be the same electrolyte, or different electrolytes. However, in consideration of the interface resistance at the interface between the polymer electrolyte membrane 11 and the electrode catalyst layer 10, and the dimensional change ratio between the polymer electrolyte membrane 11 and the electrode catalyst layer 10 in the case of a change in humidity, it is preferable that the polymer electrolyte contained in the polymer electrolyte membrane 11 and the polymer electrolyte 14 contained in the electrode catalyst layer 10 are the same electrolyte, or are polymer electrolytes with similar thermal expansion coefficients.

### [Configuration of Membrane Electrode Assembly]

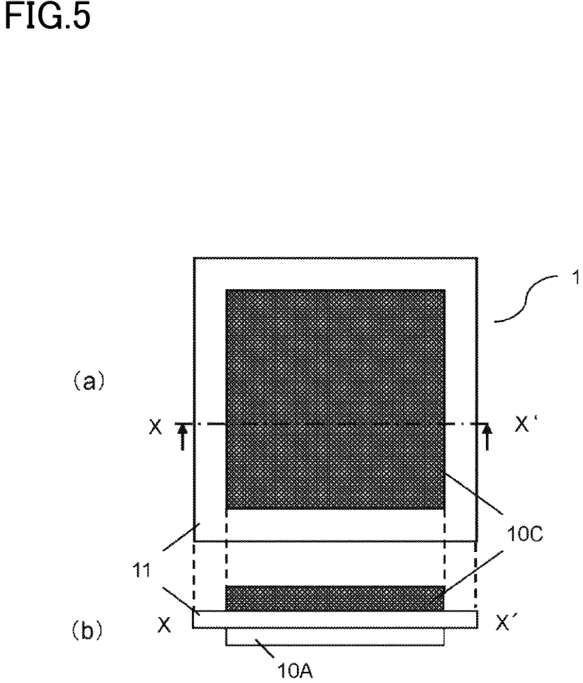

Next, a specific configuration of a membrane electrode assembly 1 including the electrode catalyst layer 10 according to the present embodiment will be described with reference to Fig. 5. Fig. 5 shows a configuration example of the membrane electrode assembly according to the present embodiment, where Fig. 5(a) is a plan view of the membrane electrode assembly when viewed from the oxygen electrode side of the electrode catalyst layer 10, and Fig. 5(b) is a cross-sectional view taken along line X-X' in Fig. 5(a).

The membrane electrode assembly 1 includes the polymer electrolyte membrane 11, and electrode catalyst layers 10C and 10A that are respectively joined to the front and rear surfaces of the polymer electrolyte membrane 11. In the present embodiment, the electrode catalyst layer 10C formed on the upper surface (front surface) of the polymer electrolyte membrane 11 is a cathode-side electrode catalyst layer constituting the oxygen electrode, and the electrode catalyst layer 10A formed on the lower surface (rear surface) of the polymer electrolyte membrane 11 is an anode-side electrode catalyst layer constituting the fuel electrode. Hereinafter, the pair of electrode catalyst layers 10C and 10A will sometimes be referred to as "electrode catalyst layers 10" when there is no need to distinguish between them. In the membrane electrode assembly 1 according to the present embodiment, the electrode catalyst layers 10 are provided on at least one surface of the polymer electrolyte membrane 11. Furthermore, an oxygen electrode-side gasket 16C and a fuel electrode-side gasket 16A are arranged in the membrane electrode assembly 1 to prevent gas leakage from the peripheral sections where the electrode catalyst layers 10 of the polymer electrolyte membrane 11 are not joined.

### [Method of Producing Membrane Electrode assembly]

A method of producing the membrane electrode assembly 1 above will be described below.

First, a catalyst ink is prepared. The catalyst material 12, the conductive carrier 13, the polymer electrolyte 14, and the fibrous material 15 are mixed with a dispersion medium, and then the catalyst ink is prepared by subjecting the mixture to a dispersion process. The dispersion process can be performed using, for example, a planetary ball mill, a bead mill, or an ultrasonic homogenizer.

As the dispersion medium of the catalyst ink, it is possible to use a solvent that does not corrode the catalyst material 12, the conductive carrier 13, the polymer electrolyte 14, and the fibrous material 15, and is also capable of dissolving the polymer electrolyte 14 in a state where the fluidity of the dispersion medium is high, or capable of dispersing the polymer electrolyte 14 as a fine gel. The dispersion medium may contain water. The catalyst ink preferably contains a volatile liquid organic solvent. Because there is a danger of ignition when the solvent is a lower alcohol, such a solvent is preferably mixed with water. Water can be mixed with the solvent to an extent in which the catalyst ink does not become cloudy or undergo gelation due to separation of the polymer electrolyte 14.

The prepared catalyst ink is applied to a substrate and is dried, such that the solvent is removed from the coating film of the catalyst ink. As a result, the electrode catalyst layer 10 is formed on the substrate. The polymer electrolyte membrane 11 or a transfer substrate can be used as the substrate. When the polymer electrolyte membrane 11 is used as the substrate, for example, it is possible to use a method in which the electrode catalyst layer 10 is formed by directly applying the catalyst ink to the surface of the polymer electrolyte membrane 11, and then removing the solvent from the coating film of the catalyst ink. Then, after directly applying the catalyst ink to the surface on the opposite side of the polymer electrolyte membrane 11 so as to sandwich the polymer electrolyte membrane 11 and face the electrode catalyst layer 10A, the electrode catalyst layer 10A is formed by removing the solvent from the coating film of the catalyst ink, which allows the membrane electrode assembly 1 to be obtained.

When a transfer substrate is used, a catalyst layer-attached substrate is prepared by applying and drying a catalyst ink on the transfer substrate. Then, for example, by performing heating and pressurization in a state where the surface of the electrode catalyst layer 10 of the catalyst layer-attached substrate and the polymer electrolyte membrane 11 are in contact with each other, the electrode catalyst layer 10 and the polymer electrolyte membrane 11 are joined together. The membrane electrode assembly 1 can be produced by joining electrode catalyst layers 10 to the two sides of the polymer electrolyte membrane 11.

In order to adjust the ratio of the number of nitrogen atoms to the total number of atoms of carbon, nitrogen, oxygen, fluorine, sulfur, and platinum obtained by energy-dispersive X-ray spectroscopy on the specific region of the electrode catalyst layer to the range mentioned above, for example, it is possible to adjust the fiber diameter of the fibers containing nitrogen in the electrode catalyst layer, adjust the amount of the polymer electrolyte in the electrode catalyst layer, or adjust the amount of the fibers containing nitrogen in the electrode catalyst layer.

Furthermore, when the gas diffusion layer 17 is used as a substrate, for example, a catalyst layer-attached gas diffusion layer 17 is prepared applying a catalyst ink to the surface of the gas diffusion layer 17, and then drying the catalyst ink. Then, by performing heating and pressurization in a state where the surface of the electrode catalyst layer 10 of the catalyst layer-attached gas diffusion layer 17 and the polymer electrolyte membrane 11 are in contact with each other, the electrode catalyst layer 10 and the polymer electrolyte membrane 11 are joined together. The membrane electrode assembly 1 can be produced by joining electrode catalyst layers 10 to the two sides of the polymer electrolyte membrane 11.

Various coating methods can be used to apply the catalyst ink to the substrate. Examples of the coating method include die coating, roll coating, curtain coating, spray coating, and squeegeeing. It is preferable to use die coating as the coating method. Die coating is preferable in that the film thickness is stable in the middle of the coating period and intermittent coating is possible. As the method of drying the coating film of the catalyst ink, for example, drying using a hot air oven, IR (far infrared) drying, drying using a hot plate, and drying under reduced pressure can be used. The drying temperature is 40°C or more and 200°C or less, and is preferably approximately 40°C or more and 120°C or less. The drying time is 0.5 minutes or more and 1 hour or less, and is preferably about 1 minute or more and 30 minutes or less.

When the electrode catalyst layer 10 is formed on the transfer substrate, the pressure and temperature applied to the electrode catalyst layer 10 during transfer of the electrode catalyst layer 10 affect the power generation performance of the membrane electrode assembly 1. To obtain a membrane electrode assembly having high power generation performance, the pressure applied to the electrode catalyst layer 10 is preferably 0.1 MPa or more and 20 MPa or less. As a result of the pressure being 20 MPa or less, excessive compression of the electrode catalyst layer 10 is suppressed. As a result of the pressure being 0.1 MPa or more, the decrease in the power generation performance due to a reduction in the joining properties between the electrode catalyst layer 10 and the polymer electrolyte membrane 11 is suppressed. In consideration of improving the joining properties of the interface between the polymer electrolyte membrane 11 and the electrode catalyst layer 10, and suppressing interface resistance, the temperature at the time of joining is preferably near the glass transition temperature of the polymer electrolyte membrane 11 or the polymer electrolyte 14 contained in the electrode catalyst layer 10.

As the transfer substrate, for example, a sheet body formed of a polymer film and a fluorine-based can be used. Fluorine-based resins have excellent transferability. Examples of fluorine-based resins include ethylene tetrafluoroethylene copolymer (ETFE), tetrafluoroethylene-hexafluoropropylene copolymer (FEP), tetrafluoroperfluoroalkyl vinyl ether copolymer (PFA), and polytetrafluoroethylene (PTFE). Examples of the polymer forming the polymer film include polyimide, polyethylene terephthalate, polyamide (Nylon (registered trademark)), polysulfone, polyethersulfone, polyphenylene sulfide, polyether ether ketone, polyether imide, polyarylate, and polyethylene naphthalate. A gas diffusion layer can also be used as the transfer substrate.

Here, by adjusting the blending ratio of the fibrous material 15, the blending ratio of the polymer electrolyte 14, the solvent composition of the catalyst ink, the dispersion strength when adjusting the catalyst ink, and the heating temperature and heating rate of the coated catalyst ink, the electrode catalyst layer 10 can be provided with sufficient gas diffusion properties and proton conductivity.

For example, the blending ratio of the polymer electrolyte 14 in the electrode catalyst layer 10 is preferably about the same to about half the weight of the conductive carrier 13. The blending ratio of the fibrous material 15 is preferably about the same or less than the weight of the conductive carrier 13. The solid content ratio of the catalyst ink is preferably high within a range in which the catalyst ink can be applied as a thin film.

In addition, the blending ratio of the fibrous material 15 containing nitrogen atoms in the electrode catalyst layer 10 is about 1 wt% or more and 10 wt% or less. If the blending ratio of the fibrous material 15 containing nitrogen atoms in the electrode catalyst layer 10 is less than 1 wt%, the effects of reducing the proton conduction resistance and improving the gas diffusion properties are not sufficiently obtained, and further, cracks can occur when forming the electrode catalyst layer 10, which can reduce the durability when operating over a long period of time. On the other hand, when the blending ratio of the fibrous material 15 in the electrode catalyst layer 10 is more than 10 wt%, the catalytic reaction can become hindered, which reduces the battery performance. The solid content ratio of the catalyst ink is preferably high within a range in which the catalyst ink can be applied as a thin film.

### [Configuration of Polymer Electrolyte Fuel Cell]

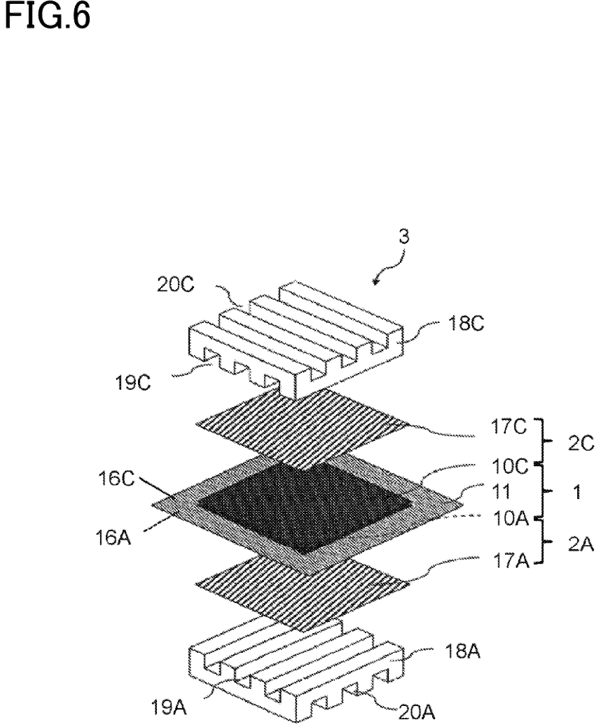

Next, a specific configuration example of a polymer electrolyte fuel cell 3 provided with the membrane electrode assembly 1 according to the present embodiment will be described with reference to Fig. 6. Fig. 6 is an exploded perspective view of an example configuration of the polymer electrolyte fuel cell 3 equipped with the membrane electrode assembly 1. Note that Fig. 6 is a configuration example of a single cell, and the polymer electrolyte fuel cell 3 is not limited to this configuration and may have a configuration in which a plurality of single cells are stacked.

As shown in Fig. 6, the polymer electrolyte fuel cell 3 includes the membrane electrode assembly 1, an oxygen electrode-side gas diffusion layer 17C, and a fuel electrode-side gas diffusion layer 17A. The gas diffusion layer 17C is arranged facing the electrode catalyst layer 10C, which is the cathode-side electrode catalyst layer on the oxygen electrode side of the membrane electrode assembly 1. Furthermore, the gas diffusion layer 17A is arranged facing the electrode catalyst layer 10A, which is the anode-side electrode catalyst layer on the fuel electrode side of the membrane electrode assembly 1. Moreover, the electrode catalyst layer 10C and the gas diffusion layer 17C constitute an oxygen electrode 2C, and the electrode catalyst layer 10A and the gas diffusion layer 17A constitute a fuel electrode 2A. Furthermore, an oxygen electrode-side gasket 16C and a fuel electrode-side gasket 16A are arranged in order to prevent gas leakage from the peripheral sections where the electrode catalyst layers 10 of the polymer electrolyte membrane 11 are not joined.

In addition, the polymer electrolyte fuel cell 3 includes a separator 18C, which is arranged facing the oxygen electrode 2C, and a separator 18A, which is arranged facing the fuel electrode 2A. The separator 18C includes gas flow paths 19C for passage of a reactant gas, which are formed on the surface facing the gas diffusion layer 17C, and cooling water flow paths 20C for passing a coolant, which are formed on the opposite surface to the surface in which the gas flow paths 19C are formed. Furthermore, the separator 18A has the same structure as the separator 18C, and includes gas flow paths 19A that are formed on the surface facing the gas diffusion layer 17A, and cooling water flow paths 20A that are formed on the opposite surface to the surface in which the gas flow paths 19A are formed. The separators 18C and 18A are made of a conductive and gas impermeable material.

Further, in the polymer electrolyte fuel cell 3, power is generated by supplying an oxidant such as air or oxygen to the oxygen electrode 2C through the gas flow paths 19C of the separator 18C, and supplying a fuel gas containing hydrogen or an organic fuel to the fuel electrode 2A through the gas flow paths 19A of the separator 18A.

As a result of adopting the membrane electrode assembly 1 according to the present embodiment, the polymer electrolyte fuel cell 3 according to the present embodiment has sufficient water drainage properties and gas diffusion properties, and is capable of exhibiting high power generation performance over the long term, and high durability.

That is, according to the present invention, it is possible to provide the electrode catalyst layer 10, the membrane electrode assembly 1, and the polymer electrolyte fuel cell 3 that have sufficient gas diffusion properties and proton conductivity during operation of the polymer electrolyte fuel cell 3, and which are capable of exhibiting high power generation performance over the long term, and high durability. Therefore, the present disclosure is suitable for stationary cogeneration systems and fuel cell cars that utilize a polymer electrolyte fuel cell and the like, and has a high industrial value.

### Second Invention Group

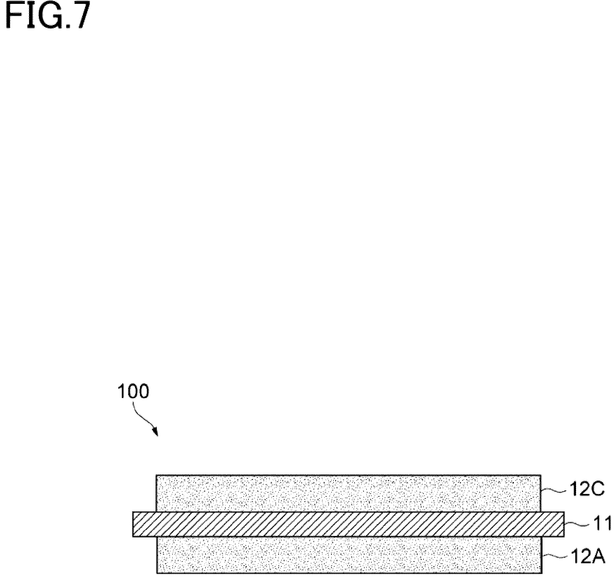

An embodiment of an electrode catalyst layer, a membrane electrode assembly, and a polymer electrolyte fuel cell will be described with reference to Figs. 7 to 9. Each of the drawings is exaggerated as appropriate for ease of understanding. Furthermore, the configurations and materials of the electrode catalyst layer, the membrane electrode assembly, the polymer electrolyte fuel cell, and their methods of production are not limited to the configurations and materials described below, and include all materials and configurations that are considered to have the same functions.

### [Membrane Electrode Assembly]

As shown in Fig. 7, the membrane electrode assembly 100 includes the polymer electrolyte membrane 11, a cathode-side electrode catalyst layer 12C, and an anode-side electrode catalyst layer 12A.

The polymer electrolyte membrane 11 is a polymer electrolyte membrane. The polymer electrolyte membrane 11 is formed, for example, using a polymer material having proton conductivity. Examples of polymer materials having proton conductivity include fluorine-based resins and hydrocarbon-based resins. Examples of fluorine-based resins include Nafion (manufactured by DuPont, registered trademark), Flemion (manufactured by AGC Inc., registered trademark), and Gore-Select (manufactured by W. L. Gore & Associates Inc., registered trademark). Examples of hydrocarbon-based resins include engineering plastics, and engineering plastics in which sulfonate groups have been introduced.

The cathode-side electrode catalyst layer 12C is an electrode catalyst layer that constitutes the air electrode, which is the cathode, and is joined to a surface on one side of the polymer electrolyte membrane 11. The cathode-side electrode catalyst layer 12C oxidizes the protons transported through the polymer electrolyte membrane 11 with an oxidant containing oxygen, and is a layer for receiving electrons from an external circuit. The anode-side electrode catalyst layer 12A is an electrode catalyst layer that constitutes the fuel electrode, which is the anode, and is joined to the surface of the polymer electrolyte membrane 11 on the opposite side to the surface on which the cathode-side electrode catalyst layer 12C is joined. The anode-side electrode catalyst layer 12A is a layer for separating a fuel gas into protons and electrons. In addition, in the following description, an electrode catalyst layer is sometimes referred to in a conceptual manner that includes the cathode-side electrode catalyst layer 12C and the anode-side electrode catalyst layer 12A.

### [Electrode Catalyst Layers]

A first electrode catalyst layer and a second electrode catalyst layer, which are electrode catalyst layers, will be described below. The cathode-side electrode catalyst layer 12C and the anode-side electrode catalyst layer 12A are both first electrode catalyst layers. Alternatively, one of the cathode-side electrode catalyst layer 12C and the anode-side electrode catalyst layer 12A is a first electrode catalyst layer, and the other is a second electrode catalyst layer. That is, at least one of the cathode-side electrode catalyst layer 12C and the anode-side electrode catalyst layer 12A is a first electrode catalyst layer. This provides the effect of improving the power generation performance at high current densities of 1.5 A/cm2 or more. Note that, from the perspective of enhancing the effects described above, when only one of the cathode-side electrode catalyst layer 12C and the anode-side electrode catalyst layer 12A is a first electrode catalyst layer, it is preferable that the cathode-side electrode catalyst layer 12C, which constitutes the air electrode, is a first electrode catalyst layer.

### (First Electrode Catalyst Layer)

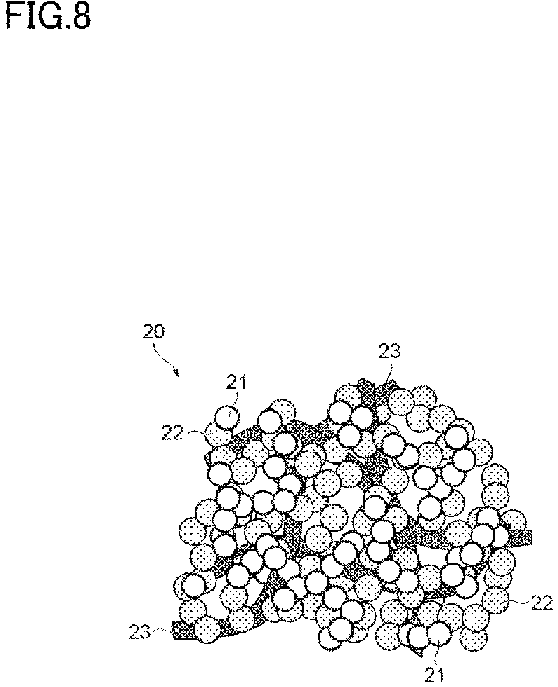

As shown in Fig. 8, the first electrode catalyst layer 20 includes catalyst supporting particles 21, a polymer electrolyte 22, and a fibrous material 23. Furthermore, the first electrode catalyst layer 20 may include, as an optional component, an additional known component that is included in an electrode catalyst layer of a fuel cell.

### <Catalyst Supporting Particles>

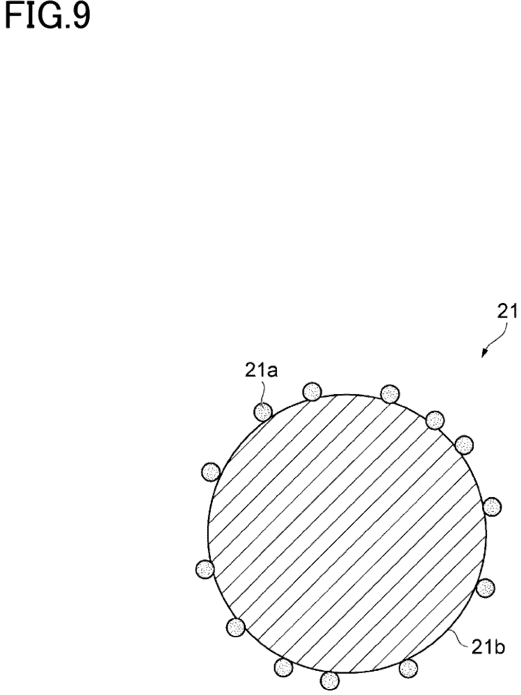

As shown in Fig. 9, a catalyst supporting particle 21 includes a catalyst 21a, and a support 21b that supports the catalyst 21a.

Examples of the catalyst 21a include metals included in the platinum group, metals other than those in the platinum group, and alloys, oxides, composite oxides, and carbides of these metals. Examples of metals included in the platinum group include platinum, palladium, ruthenium, iridium, rhodium, and osmium. Examples of metals other than those in the platinum group metals include gold, iron, lead, copper, chromium, cobalt, nickel, manganese, vanadium, molybdenum, gallium, and aluminum. Among these, platinum, gold, palladium, rhodium, ruthenium, and their alloys are preferable due to their high catalytic activity. Note that the catalyst 21a constituting the catalyst supporting particles 21 may be only a single type of catalyst as in the above example, or may be a combination of two or more types.

For example, the average particle size of the catalyst 21a is preferably 0.5 nm or more and 20 nm or less, and more preferably 1 nm or more and 5 nm or less. As a result of making the average particle size of the catalyst 21a 0.5 nm or more, a reduction in stability can be suppressed. Furthermore, as a result of making the average particle size of the catalyst 21a 20 nm or less, a reduction in activity can be suppressed. Note that, in the present description, an arithmetic mean particle size determined from a particle size measurement is defined as the average particle size.

The support 21b is made of a material that is conductive, is not infiltrated by the catalyst 21a, and is capable of supporting the catalyst 21a. Examples of the material mentioned above that constitutes the support 21b include carbon materials such as carbon black, graphite, black lead, activated carbon, carbon nanotubes, carbon nanofibers, and fullerenes, and metal oxides. The metal oxide may be, for example, tin oxide. The tin oxide may be doped with tungsten or niobium. As a result, the conductivity of the support 21b can be increased. It is particularly preferable that the support 21b is a carbon material. By selecting a carbon material as the support 21b, the surface area of the support 21b can be made larger than in cases where other supports are selected, and the catalyst 21a can be supported at a high density. As a result, the catalyst activity per support 21b can be improved. The support 21b constituting the catalyst supporting particles 21 may be only a single type of support as in the above example, or may be a combination of two or more types.

The specific surface area of the support 21b is preferably within a range of 50 m2/g or more and 2,000 m2/g or less, and more preferably within a range of 100 m2/g or more and 1,500 m2/g or less. As a result of setting the specific surface area of the support 21b to 50 m2/g or more, the catalyst 21a is supported at a high density, which makes it possible to increase the activity of the catalyst 21a. Furthermore, as a result of setting the specific surface area of the support 21b to 2,000 m2/g or less, the amount of micropores in the support 21b can be suppressed, and therefore, the gas diffusion properties in the support 21b can be improved. This suppresses an increase in the mass transport resistance of the first electrode catalyst layer 20, and as a result, suppresses a decrease in the output characteristics of a fuel cell including the first electrode catalyst layer 20.

When the support 21b is formed of carbon, the degree of graphitization of the support 21b is preferably within a range of 20% or more and 80% or less. When the degree of graphitization of the support 21b is 20% or more, loss of the support 21b due to operation and shutdown of the fuel cell is suppressed, and deterioration of the output characteristics of the fuel cell tends to be suppressed. On the other hand, when the degree of graphitization of the support 21b is 80% or less, the catalyst 21a is stably supported, and an increase in the particle size of the catalyst 21a tends be suppressed even when the fuel cell is continuously used. As a result, a reduction in the activity of the catalyst 21a is suppressed, and a decrease in the output of the fuel cell tends to be suppressed.

The shape of the support 21b is not particularly limited, and may be, for example, a particle shape or a fiber shape. From the viewpoint of smoothly transferring electrons generated on the surface of the catalyst 21a to the outside of the system, the support 21b preferably has a shape capable of supporting the catalyst 21a on the outer surface.

For example, the average particle size of the support 21b is preferably 10 nm or more and 1,000 nm or less, and more preferably 10 nm or more and 100 nm or less. As a result of setting the average particle size of the support 21b to 10 nm or more, electron conduction pathways are easily formed in the electrode catalyst layer. Furthermore, as a result of setting the average particle size of the support 21b to 1,000 nm or less, an increase in resistance due to an increase in the thickness of the first electrode catalyst layer 20 can be suppressed.

The catalyst supporting particles 21 may be provided with a hydrophobic coating. In other words, the particles supporting the catalyst 21a may be covered with a hydrophobic coating. In this case, the hydrophobic coating preferably has a film thickness that allows the reactant gas to sufficiently permeate therethrough. More specifically, the thickness of the hydrophobic coating is preferably 40 nm or less. If the thickness is larger than this, supply of the reactant gas to the active sites can sometimes become hindered. On the other hand, if the thickness of the hydrophobic coating is 40 nm or less, the reactant gas may sufficiently permeate through the hydrophobic coating, and the catalyst supporting particle can be imparted with hydrophobicity. Furthermore, the film thickness of the hydrophobic coating that covers the catalyst supporting particles 21 is preferably a film thickness that sufficiently repels generated water. More specifically, the film thickness of the hydrophobic coating is preferably 2 nm or more. As a result of the hydrophobic coating having a thickness of 2 nm or more, the retention of the generated water is suppressed, which prevents the supply of the reactant gas to the active sites from being hindered.

The hydrophobic coating covering the catalyst supporting particles 21 is formed, for example, from a fluorine-based compound having at least one polar group. Examples of the polar group include a hydroxyl group, an alkoxy group, a carboxyl group, an ester group, an ether group, a carbonate group, and an amide group. The presence of the polar group makes it possible to fix a fluorine-based compound to the outermost surface of the first electrode catalyst layer 20. The part of the fluorine compound other than the polar group preferably has a structure formed of fluorine and carbon from the perspective of achieving high hydrophobicity and chemical stability. However, the structure is not limited to this as long as the hydrophobic coating has sufficient hydrophobicity and chemical stability.

### <Polymer Electrolyte>

A material having proton conductivity is used as the polymer electrolyte 22. Examples of the substance having proton conductivity include fluorine-based polymer electrolytes and hydrocarbon-based polymer electrolytes. Examples of the fluorine-based polymer electrolyte include those having a tetrafluoroethylene skeleton, a representative example being Nafion (registered trademark) manufactured by DuPont. Examples of the hydrocarbon-based polymer electrolyte include sulfonated polyether ketone, sulfonated polyether sulfone, sulfonated polyether ether sulfone, sulfonated polysulfide, and sulfonated polyphenylene. Note that the polymer electrolyte 22 constituting the first electrode catalyst layer 20 may be composed of only one type among the above examples, or may be of a combination of two or more types.

The polymer electrolyte 22 may have a proton-donating group. Examples of the proton-donating group include a sulfonic acid group. In the polymer electrolyte 22, the dry weight per mole of the proton-donating group (equivalent weight EW) is preferably within a range of 600 g/mol or more and 1,200 g/mol or less, and more preferably within a range of 700 g/mol or more and 1,000 g/mol or less. As a result of setting the equivalent weight EW to 600 g/mol or more, a reduction in the power generation performance due to flooding tends to be suppressed. As a result of setting the equivalent weight EW to 1,200 g/mol or less, because a reduction in the proton conductivity can be suppressed, a reduction in the power generation performance of the fuel cell provided with the electrode catalyst layer tends to be suppressed. The dry weight is the weight that is measured after the polymer electrolyte 22 is dried under reduced pressure at 100°C for 1 day.

The content of the polymer electrolyte in the first electrode catalyst layer 20 is preferably, for example, 40 parts by mass or more and 140 parts by mass or less when the content of the support 21b in the first electrode catalyst layer 20 is 100 parts by mass. As a result of setting the content of the polymer electrolyte to 40 parts by mass or more, a reduction in the proton conductivity caused by defects in the proton conduction pathways can be suppressed. As a result, it becomes easier to ensure a balance between the proton conductivity and the electron conductivity in the first electrode catalyst layer 20. As a result of setting the content of the polymer electrolyte to 140 parts by mass or less, the catalyst 21a of the catalyst supporting particle 21 can be appropriately exposed. As a result, the catalytic activity in the first electrode catalyst layer 20 is enhanced.

### <Fibrous Material>

The fibrous material 23 is preferably a material that is not affected by the catalyst 21a and the polymer electrolyte 22, and is preferably a hydrophilic carbon fiber or a high-molecular weight polymer fiber. The fibrous material 23 suppresses cracking in the electrode catalyst layer, and increases the durability of the electrode catalyst layer. Examples of hydrophilic carbon fibers include VGCF (vapor grown carbon fiber) and CNT (carbon nanotubes) that have been imparted with hydrophilicity.

The fibrous material 23 may include Lewis acidic or Lewis basic functional groups in the molecular structure of the material. This makes it easier for the polymer electrolyte 22 to exist around the fibrous material 23. Examples of the fibrous material 23 having a Lewis acidic functional group include hydrophilic carbon fibers, and high-molecular weight polymer fibers having a hydroxyl group, a carbonyl group, a sulfonic acid group, or a phosphorous acid group. Examples of the fibrous material 23 having a Lewis basic functional group include high-molecular weight polymer fibers having an imide structure or an azole structure. Proton-conducting sites such as sulfonyl groups contained in the polymer electrolyte 22 form hydrogen bonds with the Lewis acidic functional groups in the fibrous material 23, which makes it easier for the polymer electrolyte 22 to exist around the fibrous material 23. On the other hand, if there is a basic functional group in the fibrous material 23, acidic proton-conducting sites such as sulfonyl groups contained in the polymer electrolyte 22 form an acid-base bond, which makes it easier for the polymer electrolyte 22 to exist around the fibrous material 23. Because acid-base bonds have a stronger bonding strength than hydrogen bonds, it is preferable that the fibrous material 23 contains a Lewis basic functional group. Among these, it is preferable that the fibrous material 23 has an azole structure. An azole structure refers to a five-membered heterocyclic structure containing one or more nitrogen atoms, and examples include an imidazole structure and an oxazole structure. The material containing nitrogen atoms preferably has a benzoazole structure, such as a benzimidazole structure or a benzoxazole structure. Specific examples of the material containing nitrogen atoms include polymers such as polybenzimidazole and polybenzoxazole.

The shape of the fibrous material 23 is not particularly limited, and may be, for example, a hollow structure or a solid structure. Note that the fibrous material 23 constituting the first electrode catalyst layer 20 may be composed of only one type among the above examples, or may be of a combination of two or more types.

The ratio of the number of fluorine atoms to the total number of atoms of carbon, nitrogen, oxygen, fluorine, sulfur, and platinum obtained by energy-dispersive X-ray spectroscopy on a specific region of a cross-section of the first electrode catalyst layer 20 is 0.2 at% or more. As a result of the ratio of the number of fluorine atoms being in such a range, the proton conductive pathways are appropriately constructed in the first electrode catalyst layer 20. As a result, the first electrode catalyst layer 20 has superior initial power generation performance from a low current density region to a high current density region. The ratio of fluorine atoms is preferably 0.3 at% or more, and is more preferably 0.4 at% or more. The ratio of fluorine atoms may be 1 at% or less.

The specific region is a region that contains 50 area% or more of the fibrous material 23, and does not contain the catalyst supporting particles 21. Fig. 2 is schematic diagram showing an example of a cross-section of the first electrode catalyst layer. The cross-section of the first electrode catalyst layer is composed of a region R1, which includes the catalyst supporting particles 21, and a region R2, which does not contain the catalyst supporting particles 21. The region R2 is composed of the fibrous material 23 and a region n that does not contain the fibrous material 23. In Fig. 2, the specific region (observation area) described above is represented by A. The shape of the region (observation area) can have a rectangular shape (including a square shape), and, for example, is a square shape of 150 nm × 150 nm. In the specific region, the fibrous material 23 may account for 100% of the area. It is sufficient for one specific region to be in the cross-section.

The method of exposing the cross-section of the first electrode catalyst layer 20 includes, for example, known methods such as ion milling and ultramicrotomy. When performing processing that exposes the cross-section, in order to reduce the damage to the polymer electrolyte membrane 11 and the polymer electrolyte 22 that constitutes the first electrode catalyst layer 20, it is particularly preferable to use cryo-ion milling which performs processing while cooling the first electrode catalyst layer 20.

The composition ratio of elements in the specific region can be measured by, for example, performing element mapping using a transmission electron microscope equipped with an energy-dispersive X-ray spectrometer (TEM-EDX). The acceleration voltage of X-rays in the EDX is preferably 200 kV. Such an acceleration voltage allows the electron beam to penetrate to about nm level thickness in the specific region, and information about the fibrous material 23 and the elements in the surrounding area can be obtained.

The polymer electrolyte 22 may cover at least a portion of a surface of the fibrous material 23. As a result, the obtained membrane electrode assembly tends to have improved durability, and exhibit high power generation characteristics even under low humidity conditions. Whether the polymer electrolyte 22 is covering at least a portion of the surface of the fibrous material 23 can be confirmed by the following method. Here, elemental mapping is performed on a specific region of a cross-section of the first electrode catalyst layer 20 using a transmission electron microscope equipped with an energy-dispersive X-ray spectrometer (TEM-EDX) or a scanning transmission electron microscope equipped with an energy-dispersive X-ray spectrometer (STEM-EDX). The elements that are measured are fluorine atoms and at least one type of atom contained in the fibrous material 23. With respect to the mapping result, the boundary between the region in which the type of atom contained in the fibrous material 23 is not observed, and the region in which the type of atom contained in the fibrous material 23 is not observed is defined as the surface of the fibrous material. When fluorine is observed within a range of 10 nm from the surface of the fibrous material, it is determined that at least a portion of the surface of the fibrous material 23 is covered.

The thickness of the polymer electrolyte 22 covering the fibrous material 23 may be the distance from the fluorine detected at the position furthest from the surface of the fibrous material 23 to the surface of the fibrous material 23. The thickness of the polymer electrolyte 22 covering the fibrous material 23 is preferably 3 nm or more and 30 nm or less, and is more preferably 10 nm or more and 30 nm or less. When the thickness of the coating layer is within this range, protons can migrate on the fibrous material 23.

The fibrous material 23 may have a function of adsorbing the polymer electrolyte 22. As a result of the polymer electrolyte 22 being adsorbed onto the fibrous material 23, an improvement in durability is obtained through high mechanical characteristics, such as suppression of the occurrence of cracks, and further, proton conduction paths are formed by the polymer electrolyte 22, which enables a high power generation performance to be obtained. Whether the polymer electrolyte 22 is adsorbed on the fibrous material 23 can be confirmed by a scanning transmission electron microscope equipped with energy-dispersive X-ray spectroscopy (STEM-EDX).

Because the mechanical characteristics are improved, the adsorption capacity of the fibrous material 23 with respect to the polymer electrolyte 22 is preferably 10 mg/g or more, is more preferably 15 mg/g or more, and may be 30 mg/g or less. The adsorption capacity of the fibrous material 23 with respect to the polymer electrolyte 22 can be measured by the following method. That is, the fibrous material 23 is brought into contact with a dispersion liquid in which the polymer electrolyte 22 is dispersed at a predetermined concentration. The fibrous material 23 is extracted from the dispersion liquid, and the dispersion liquid is filtered through a predetermined filter (for example, an aperture of 0.3 to 0.5 µm). The concentration of the polymer electrolyte in the filtrate is measured. From the concentration, the amount of the polymer electrolyte adsorbed per gram of the fibrous material is calculated.

The average fiber diameter of the fibrous material 23 is preferably in a range of 10 nm or more and 500 nm or less, and more preferably in a range of 10 nm or more and 300 nm or less. As a result of the fiber diameter being included in this range, the catalyst 21a can be brought closer together inside the first electrode catalyst layer 20, and the output of the fuel cell including the first electrode catalyst layer 20 can be increased. The average fiber diameter of the fibrous material 23 can be measured by observation with a scanning electron microscope (SEM).

The average fiber length of the fibrous material 23 is preferably in a range of 0.7 µm or more and 40 µm or less, and more preferably in a range of 2 µm or more and 30 µm or less. As a result of the average fiber length being included in this range, the strength of the first electrode catalyst layer 20 increases, and the occurrence of cracks tends to be suppressed. Consequently, the first electrode catalyst layer 20 tends to have improved durability against physical impacts. Furthermore, as a result of the average fiber length being included in this range, the number of pores formed in the first electrode catalyst layer 20 increases, which tends to enable an increase in the output of the fuel cell. The average fiber length of the fibrous material 23 can be measured by observation with an SEM.

In addition, in the fuel cell, the amount of generated water that is formed in the electrode catalyst layer as a result of the cell reaction is proportional to the amount of the chemical reaction. Therefore, when power is generated at a high current density, the amount of generated water increases. If the generated water is not sufficiently discharged to the outside of the electrode catalyst layer, the generated water remaining in the electrode catalyst layer may block the gas diffusion pathways. In this case, flooding occurs, which is a phenomenon in which the reactant gas cannot reach the active sites and the power generation performance is significantly reduced. As a result of using the fibrous material 23 as a constituent material of the first electrode catalyst layer 20, an appropriate amount of space is ensured within the first electrode catalyst layer 20, which also has the effect of promoting the drainage of the generated water.

The content of the fibrous material 23 in the first electrode catalyst layer 20 is preferably 5 parts by mass or more and 20 parts by mass or less, or more preferably 5 parts by mass or more and 10 parts by mass or less when the content of the support 21b in the first electrode catalyst layer 20 is 100 parts by mass.

As a result of setting the content of the fibrous material 23 to 5 parts by mass or more, a network is formed between the fibrous material 23, making it easier to form the electrode catalyst layer. This makes it possible to sufficiently establish proton conduction pathways and establish electron conduction pathways in the electrode catalyst layer, and structurally strengthen the electrode catalyst layer. As a result, the power generation performance of the fuel cell is improved. Furthermore, as a result of setting the content of the fibrous material 23 to 20 parts by mass or less, an increase in resistance due to an increase in the thickness of the first electrode catalyst layer 20 can be suppressed.

The density of the first electrode catalyst layer 20 is preferably within a range of 1,000 mg/cm3 or more and 5,000 mg/cm3 or less, and more preferably within a range of 1,500 mg/cm3 or more and 4,000 mg/cm3 or less. As a result of the density of the first electrode catalyst layer 20 being 1,000 mg/cm3 or more, because the amount of catalyst per unit volume can be prevented from becoming small, a reduction in the output of the fuel cell can be suppressed. In addition, as a result of the density of the first electrode catalyst layer 20 being 1,000 mg/cm3 or more, the distance between the polymer electrolyte 22 and the fibrous material 23 can be prevented from becoming large, and the electrode catalyst layer 12 becomes less likely to collapse. As a result, the durability of the first electrode catalyst layer 20 tends to improve. As a result of the density being 5,000 mg/cm3 or less, the internal structure of the electrode catalyst layer 12 does not become excessively dense, and a reduction in the water drainage properties and the gas diffusion properties tends to be suppressed. Consequently, the first electrode catalyst layer 20 tends to be capable of suppressing a reduction in the output, even during high output. In addition, if the density is 5,000 mg/cm3 or less, a reduction in the joining strength of the first electrode catalyst layer 20 tends to be suppressed.

### (Second Electrode Catalyst Layer)

A known electrode catalyst layer that is applied to a membrane electrode assembly can be used as the second electrode catalyst layer. Examples of the second electrode catalyst layer include electrode catalyst layers that differ from the first electrode catalyst layer 20 in that a hydrophilic carbon fiber and a high-molecular weight polymer fiber are not included, but otherwise have the same configuration as the first electrode catalyst layer 20.

Note that, in terms of the materials described above that are used as the components of the first electrode catalyst layer and the second electrode catalyst layer, the materials used for the cathode-side electrode catalyst layer 12C and the materials used for the anode-side electrode catalyst layer 12A may be the same, or at least a portion may be different.

The ratio (T2/T1) of the average thickness T2 of the anode-side electrode catalyst layer 12A to the average thickness T1 of the cathode-side electrode catalyst layer 12C is preferably 1.0 times or more and 2.0 times or less. As a result of T2/T1 being 1.0 times or more, the catalyst layer thickness becomes greater than the cathode-side electrode catalyst layer 12C, and the volume of water that can be retained becomes large. In this case, the diffusion of water formed in the cathode-side electrode catalyst layer 12C to the anode-side electrode catalyst layer 12A is promoted, and the gas diffusion resistance in the cathode-side electrode catalyst layer 12C can sometimes decrease. As a result, the output of the fuel cell tends to improve. On the other hand, as a result of T2/T1 being 2.0 times or less, the thickness of the cathode-side electrode catalyst layer 12C becomes small, and the mechanical strength of the membrane electrode assembly 100 can sometimes become low. As a result, the polymer electrolyte membrane 11 can sometimes suffer damage on the cathode side, and cause the fuel cell to stop operating.

### [Polymer Electrolyte Fuel Cell]

Next, the configuration of the polymer electrolyte fuel cell including the membrane electrode assembly 100 will be described. In the following, a single cell polymer electrolyte fuel cell will be described as an example of the polymer electrolyte fuel cell. The polymer electrolyte fuel cell is not limited to a single cell configuration, and may include a plurality of single cells, and have a configuration in which the plurality of single cells are stacked.

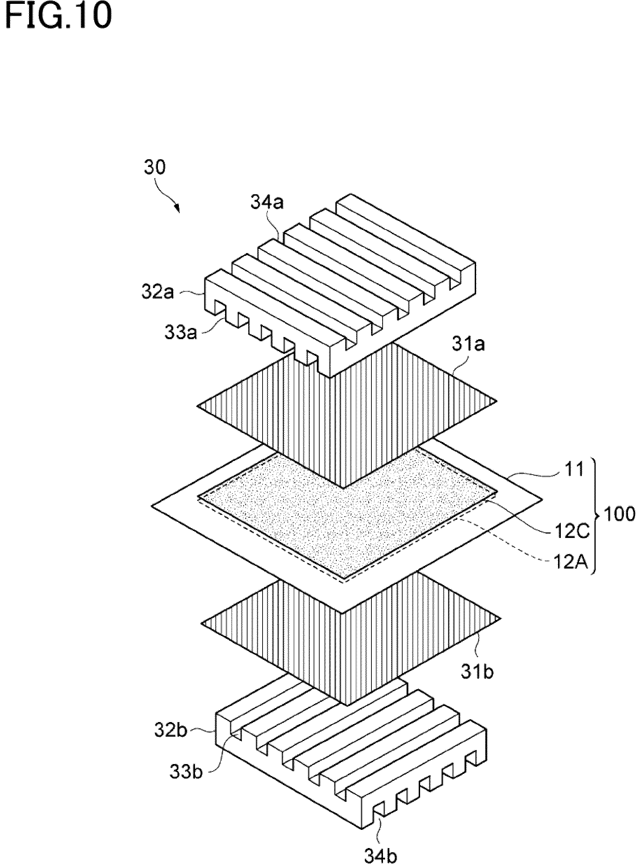

As shown in Fig. 10, the polymer electrolyte fuel cell 30 includes the membrane electrode assembly 100, a pair of gas diffusion layers 31a and 31b, and a pair of separators 32a and 32b.

The gas diffusion layers 31a and 31b are layers for uniformly diffusing a reactant gas. The gas diffusion layer 31a is disposed so as to face the cathode-side electrode catalyst layer 12C of the membrane electrode assembly 100. The gas diffusion layer 31b is disposed so as to face the anode-side electrode catalyst layer 12A of the membrane electrode assembly 100. The pair of gas diffusion layers 31a and 31b sandwich the membrane electrode assembly 100 in the thickness direction of the membrane electrode assembly 100. Furthermore, the cathode-side electrode catalyst layer 12C and the gas diffusion layer 31a form the air electrode, which is the cathode. The anode-side electrode catalyst layer 12A and the gas diffusion layer 31b form the fuel electrode, which is the anode.

The gas diffusion layers 31a and 31b are configured by a material having electron conductivity and gas diffusion properties. As the material forming the gas diffusion layers 31a and 31b, for example, a porous carbon material can be used. Examples of the porous carbon material include carbon cloth, carbon paper, and nonwoven fabrics.

The separators 32a and 32b are members that serves the role of extracting electrons to an external circuit, and are arranged on the outside of the gas diffusion layer 31b. The pair of separators 32a and 32b sandwich the membrane electrode assembly 100 and the pair of gas diffusion layers 31a and 31b in the thickness direction of the membrane electrode assembly 100.

The separators 32a and 32b have gas flow paths 33a and 33b and cooling water flow paths 34a and 34b. The gas flow paths 33a and 33b are flow paths for circulating the reactant gas, and are formed in a surface of the separators 32 and 32b facing the gas diffusion layers 31a and 31b. The cooling water flow paths 34a and 34b are flow paths for circulating cooling water, and are formed in a surface of the separators 32 and 32b that is on the opposite side to the surface facing the gas diffusion layers 31a and 31b.

The separators 32a and 32b are formed of a material that is conductive, and impermeable to gas. Examples of the material forming the separators 32a and 32b include carbon materials and metal materials. Furthermore, the material forming the separators 32a and 32b is preferably a material having a certain degree of strength and good formability.

The gas flow paths 33a of the separator 32a that faces the gas diffusion layer 31a, which constitutes the air electrode, are supplied with an oxidant gas that serves as the reactant gas. The oxidant gas is, for example, air or oxygen gas. The gas flow paths 33b of the separator 32b that faces the gas diffusion layer 3 1b, which constitutes the fuel electrode, are supplied with a fuel gas that serves as the reactant gas. The fuel gas is, for example, hydrogen gas.

In the polymer electrolyte fuel cell 30, the fuel gas containing hydrogen is supplied to the fuel electrode and the oxidant gas containing oxygen is supplied to the air electrode, and power is generated due to the electrode reactions shown in equations 1 and 2 at the fuel electrode and the air electrode. Furthermore, the polymer electrolyte fuel cell is used by being combined with associated devices such as a gas supply device and a cooling device.

Fuel electrode: H2 → 2H+ + 2e- (equation 1)

Air electrode: 1/2 O2 + 2H+ + 2e- → H2O (equation 2)

### [Method of Producing Membrane Electrode assembly]

A method of producing the membrane electrode assembly 100 will be described below.

The method of producing the membrane electrode assembly 100 includes a preparation step for preparing a catalyst ink, and a forming step for forming an electrode catalyst layer using the catalyst ink.

### (Preparation Step)

In the preparation step, each of the components constituting the electrode catalyst layer are mixed using a dispersion medium to prepare the catalyst ink.

The dispersion medium is not particularly limited as long as it is capable of dispersing the components constituting the electrode catalyst layer. Examples of the dispersion medium include water, alcohols, ketones, and mixtures of these. Specifically, water, alcohols such as methanol, ethanol, 1-propanol, 2-propanol, 1-butanol, 2-butanol, isobutyl alcohol and tert-butyl alcohol, and ketones such as acetone, methyl ethyl ketone, methyl propyl ketone, methyl butyl ketone, methyl isobutyl ketone, methyl amyl ketone, pentanone, heptanone, cyclohexanone, methylcyclohexanone, acetonylacetone, diethyl ketone, dipropyl ketone and diisobutyl ketone can be used as appropriate.

The catalyst ink may contain a dispersant for adequately dispersing each of the components constituting the electrode catalyst layer. Examples of the dispersant include anionic surfactants, cationic surfactants, amphoteric surfactants, and nonionic surfactants.

Examples of the anionic surfactant include carboxylic acid-type surfactants, such as alkyl ether carboxylate, ether carboxylate, alkanoyl sarcosine, alkanoyl glutamate, acyl glutamate, oleic acid/N-methyltaurine, potassium oleate/diethanolamine salts, alkyl ether sulfate/triethanolamine salts, polyoxyethylene alkyl ether sulfate/triethanolamine salts, amine salts of special modified polyether ester acids, amine salts of higher fatty acid derivatives, amine salts of special modified polyester acids, amine salts of high-molecular weight polyether ester acids, amine salts of special modified phosphate esters, high-molecular weight polyesteric acid amidamine salts, amidoamine salts of special fatty acid derivatives, alkylamine salts of higher fatty acids, amidoamine salts of high-molecular weight polycarboxylic acids, sodium laurate, sodium stearate, and sodium oleate; sulfonic acid-type surfactants, such as dialkyl sulfosuccinate, dialkyl sulfosuccinate, 1,2-bis(alkoxycarbonyl)-1-ethanesulfonate, alkyl sulfonate, alkyl sulfonate, paraffin sulfonate, α-olefin sulfonate, linear alkylbenzene sulfonate, alkylbenzene sulfonate, polynaphthyl methanesulfonate, polynaphthyl methanesulfonate, naphthalene sulfonate-formalin condensate, alkylnaphthalene sulfonate, alkanoyl methyltaurine, lauryl sulfate ester sodium salt, cetyl sulfate ester sodium salt, stearyl sulfate ester sodium salt, oleyl sulfate ester sodium salt, lauryl ether sulfate ester salt, sodium alkylbenzene sulfonates, oil-soluble alkylbenzene sulfonates, and α-olefin sulfonates; sulfuric acid ester-type surfactants, such as alkyl sulfuric ester salts, alkyl sulfate salts, alkyl sulfates, alkyl ether sulfates, polyoxyethylene alkyl ether sulfates, alkyl polyethoxysulfates, polyglycol ether sulfates, alkyl polyoxyethylene sulfates, sulfated oils, and highly sulfated oils; and phosphoric acid ester-type surfactants, such as phosphoric acid (mono or di)alkyl salts, (mono or di)alkyl phosphate, (mono or di)alkyl phosphate ester salts, alkyl phosphate polyoxyethylene salts, alkyl ether phosphates, alkyl polyethoxy/phosphates, polyoxyethylene alkyl ethers, alkyl phenyl phosphates/polyoxyethylene salts, alkylphenyl ethers/phosphates, alkylphenyl/polyethoxy phosphates, polyoxyethylene/alkylphenyl/ether phosphates, higher alcohol phosphoric acid monoester disodium salts, higher alcohol phosphoric acid diester disodium salts, and zinc dialkyldithiophosphates.

Examples of the cationic surfactant include benzyldimethyl{2-[2-(P-1,1,3,3-tetramethylbutylphenoxy)ethoxy]ethyl}ammonium chloride, octadecylamine acetate, tetradecylamine acetate, octadecyltrimethylammonium chloride, beef tallow trimethylammonium chloride, dodecyltrimethylammonium chloride, coconut trimethylammonium chloride, hexadecyltrimethylammonium chloride, behenyltrimethylammonium chloride, coconut dimethylbenzylammonium chloride, tetradecyldimethylbenzylammonium chloride, octadecyldimethylbenzylammonium chloride, dioleyldimethylammonium chloride, 1-hydroxyethyl-2-beef tallow imidazoline quaternary salts, 2-heptadecenyl-hydroxyethyl imidazoline, stearamide ethyldiethylamine acetate, stearamide ethyldiethylamine hydrochloride, triethanolamine monostearate formate, alkylpyridium salts, higher alkylamine ethylene oxide adducts, polyacrylamide amine salts, modified polyacrylamide amine salts, and perfluoroalkyl quaternary ammonium iodide.

Examples of the amphoteric surfactant include dimethylcocobetaine, dimethyllauryl betaine, sodium lauryl aminoethyl glycine, sodium lauryl aminopropionate, stearyldimethylbetaine, lauryl dihydroxyethyl betaine, amido betaine, imidazolium betaine, lecithin, 3-[ω-fluoroalkanoyl-N-ethylamino]-1-sodium propanesulfonate, and N-[3-(perfluorooctane sulfonamide)propyl-N, N-dimethyl-N-carboxymethylene ammonium betaine.

Examples of the nonionic surfactant include coconut fatty acid diethanolamide (1:2 type), coconut fatty acid diethanolamide (1:1 type), beef tallow fatty acid diethanolamide (1:2 type), beef tallow fatty acid diethanolamide (1:1 type), oleic acid diethanolamide (1:1 type), hydroxyethyl lauryl amine, polyethylene glycol laurylamine, polyethylene glycol coconut amine, polyethylene glycol stearylamine, polyethylene glycol beef tallow amine, polyethylene glycol beef tallow propylene diamine, polyethylene glycol dioleylamine, dimethyllaurylamine oxide, dimethylstearylamine oxide, dihydroxyethyllaurylamine oxide, perfluoroalkylamine oxide, polyvinylpyrrolidone, higher alcohol ethylene oxide adducts, alkylphenol ethylene oxide adducts, fatty acid ethylene oxide adducts, polypropylene glycol ethylene oxide adducts, fatty acid esters of glycerin, fatty acid esters of pentaerythrite, fatty acid esters of sorbitol, fatty acid esters of sorbitan, and fatty acid esters of sugars.

Among the surfactants mentioned above, the sulfonic acid type surfactants, such as alkylbenzene sulfonic acid, oil-soluble alkylbenzene sulfonic acid, α-olefin sulfonic acid, sodium alkylbenzene sulfonate, oil-soluble alkylbenzene sulfonate, and α-olefin sulfonate, are preferable for use as a surfactant in that a superior carbon dispersion effect is obtained, and variations in the catalytic performance due to residual dispersant are unlikely to occur.

The dispersion method in the preparation step is not particularly limited as long as it is capable of dispersing each of the component contained in the catalyst ink, and any known dispersion method can be used. Examples of known dispersion methods include methods using a planetary ball mill, a bead mill, or an ultrasonic homogenizer. Furthermore, the blending ratio of each of the components and the dispersion medium in the catalyst ink can be appropriately selected depending on the coating properties and the required power generation performance.

### (Forming Step)

In the forming step, the catalyst ink obtained in the preparation step is coated on a substrate, and then drying processing that volatilizes the dispersion medium is performed to form the electrode catalyst layer in the form of a coating film. The polymer electrolyte membrane 11, a transfer substrate, or the gas diffusion layers 31a and 31b can be used as the substrate.

The coating method used when coating the catalyst ink on the substrate is not particularly limited, and any known coating method that is applied when coating a slurry mixture on a substrate with a uniform film thickness can be used. Known coating methods include, for example, die coating, bar coating, spray coating, dipping, and screen printing. Among these methods, it is preferable to use the die coating method because the viscosity range of the catalyst ink that can be coated is relatively wide, and the coating can be performed with high uniformity in the film thickness.

The drying method used in the drying processing is not particularly limited as long as it is a method that is capable of volatilizing the dispersion medium, and a known drying method such as a method using an oven, a hot plate, or far infrared rays can be used. In addition, the drying temperature and the drying time of the drying processing can be appropriately selected according to the materials used for the electrode catalyst layer and the substrate.

Moreover, when a transfer substrate is used as the substrate, processing is performed that transfers the electrode catalyst layer formed on the transfer substrate from the transfer substrate to the polymer electrolyte membrane 11. In this case, the transfer method may be, for example, a transfer method using thermocompression bonding.

The transfer substrate is not particularly limited as long as it allows the formed electrode catalyst layer to be released and transferred to the polymer electrolyte membrane. As the transfer substrate, for example, a fluorine-based resin film can be used. Fluorine-based resin films have excellent transferability. Examples of the fluorine-based resin constituting the fluorine-based resin film include ethylene tetrafluoroethylene copolymer (ETFE), tetrafluoroethylene-hexafluoropropylene copolymer (FEP), tetrafluoroperfluoroalkyl vinyl ether copolymer (PFA), and polytetrafluoroethylene (PTFE).

When the polymer electrolyte membrane 11 or a transfer substrate is used as the transfer substrate, the membrane electrode assembly 100 is obtained by providing electrode catalyst layers on the two sides of the polymer electrolyte membrane 11. Further, the polymer electrolyte fuel cell 30 is obtained by stacking the obtained membrane electrode assembly 100, the gas diffusion layers 31a and 31b, and the separators 32a and 32b.

In addition, if the gas diffusion layers 31a and 31b are used as the transfer substrate, the membrane electrode assembly 100 having the gas diffusion layers 31a and 31b is obtained by stacking the polymer electrolyte membrane 11 and the gas diffusion layers 31a and 31b formed having the electrode catalyst layer. Further, the polymer electrolyte fuel cell 30 is obtained by stacking the obtained membrane electrode assembly 100 and the separators 32a and 32b.

Note that the method of producing the electrode catalyst layer when producing the cathode-side electrode catalyst layer 12C may be the same as the method of producing the electrode catalyst layer when producing the anode-side electrode catalyst layer 12A, or may be different.

### [Examples]

### First Investigation

Hereinafter, the membrane electrode assembly according to Examples based on the present disclosure will be described.

### [Example 1A1]

In Example 1A1, a platinum-supported carbon catalyst (TEC10E50E, manufactured by Tanaka Kikinzoku Kogyo Co., Ltd.), water, 1-propanol, a polymer electrolyte (20% Nafion (registered trademark) dispersion liquid, manufactured by Wako Pure Chemical Industries, Ltd.) and a fibrous material containing nitrogen atoms (polyazole fiber, average fiber diameter 100 to 400 nm, average fiber diameter distribution peak 210 nm) were mixed together. The mixture was dispersed using a planetary ball mill at 300 rpm for 60 minutes. At this time, zirconia balls with a diameter of 5 mm were added to a level of about one third of a zirconia container. The catalytic ink was prepared by adjusting the weight of the polymer electrolyte to be 100 wt% with respect to the weight of the carbon support in the platinum-supported carbon catalyst, the weight of the fibrous material containing nitrogen atoms to be 10 wt% with respect to the weight of the carbon support in the platinum-supported carbon catalyst, the proportion of water in the dispersion medium to be 50 wt%, and the solid content concentration to be 10 wt%.

A coating film was formed by applying the catalyst ink to one side of a polymer electrolyte membrane (Nafion (registered trademark) 211, manufactured by Dupont) using a slit die coater so as to have a thickness of 200 µm. Next, the polymer electrolyte membrane with the coating film formed thereon was dried in a hot air oven at 80°C until the tackiness of the coating film disappeared to form a cathode-side electrode catalyst layer. Then, a coating film was formed by applying the catalyst ink to the opposite side of the polymer electrolyte membrane using a slit die coater so as to have a thickness of 50 µm. Next, the polymer electrolyte membrane with the coating film formed thereon was dried in a hot air oven at 80°C until the tackiness of the coating film disappeared to form an anode-side electrode catalyst layer. As a result, the membrane electrode assembly of Example 1A1 was obtained. The nitrogen atom composition ratio in the catalyst layer was 12%.

### [Example 1A2]

The membrane electrode assembly of Example 1A2 was obtained in the same manner as in Example 1A1, except that the amount of the fibrous material containing nitrogen atoms was doubled (to 20 wt% with respect to the weight of the carbon support) relative to Example 1A1 when preparing the catalyst ink. The nitrogen atom composition ratio in the catalyst layer was 20%.

### [Example 1A3]

The membrane electrode assembly of Example 1A3 was obtained in the same manner as in Example 1A2, except that the amount of the fibrous material containing nitrogen atoms was halved (to 5 wt% with respect to the weight of the carbon support) relative to Example 1A1 when preparing the catalyst ink. The nitrogen atom composition ratio in the catalyst layer was 2%.

### [Comparative Example 1A1]

The membrane electrode assembly of Comparative Example 1A1 was obtained in the same manner as in Example 1A1, except that carbon nanofibers (VGCF-H (registered trademark), manufactured by Showa Denko Packaging Co., Ltd.) were added instead of the fibrous material containing nitrogen atoms when preparing the catalyst ink. The nitrogen atom composition ratio in the catalyst layer was 0%.

### [Comparative Example 1A2]

The membrane electrode assembly of Comparative Example 1A2 was obtained in the same manner as in Example 1A1, except that the amount of the fibrous material containing nitrogen atoms was 1/10 (1 wt% with respect to the weight of the carbon support) relative to Example 1A1 when preparing the catalyst ink. The nitrogen atom composition ratio in the catalyst layer was 0.8%.

### [Comparative Example 1A3]

The membrane electrode assembly of Comparative Example 1A3 was obtained in the same manner as in Example 1A1, except that the amount of the fibrous material containing nitrogen atoms was tripled (to 30 wt% with respect to the weight of the carbon support) relative to Example 1A1 when preparing the catalyst ink. The nitrogen atom composition ratio in the catalyst layer was 21%.

Hereinafter, the results of comparing the content of the fibrous material, the power generation performance, and the durability of each polymer electrolyte fuel cell including the membrane electrode assembly of Examples 1A1 to 1A3 and the membrane electrode assembly of Comparative Examples 1A1 to 1A3 will be described.

### [Example 1B1]

In Example 11, a platinum-supported carbon catalyst (TEC10E50E, manufactured by Tanaka Kikinzoku Kogyo Co., Ltd.), water, 1-propanol, a polymer electrolyte (Nafion (registered trademark) dispersion liquid, manufactured by Wako Pure Chemical Industries, Ltd.) and the fibrous material 15 (polyazole fiber, average fiber diameter 200 nm, fiber diameter distribution peak 205 nm, approximate average fiber length 20 µm) were mixed together. The mixture was dispersed using a planetary ball mill (P-7 manufactured by Fritsch Japan Co., Ltd.) at 500 rpm for 60 minutes. At this time, zirconia balls with a diameter of 5 mm were added to a level of about one third of a zirconia container. Note that the catalytic ink was prepared by adjusting the mass of the polymer electrolyte to be 100% by mass with respect to the mass of the carbon particles, the mass of the fibrous material in the solid content to 1% by mass, the ratio of water in the dispersion medium to be 50% by mass, and the solid content to be 10% by mass.

A coating film was formed by applying the catalyst ink to one side of a polymer electrolyte membrane (Nafion (registered trademark) 211, manufactured by Dupont) using a slit die coater so as to have a thickness of 100 µm. Next, the polymer electrolyte membrane with the coating film formed thereon was dried in a hot air oven at 80°C until the tackiness of the coating film disappeared to form a cathode-side electrode catalyst layer. Then, a coating film was formed by applying the catalyst ink to the opposite side of the polymer electrolyte membrane using a slit die coater so as to have a thickness of 50 µm. Next, the polymer electrolyte membrane with the coating film formed thereon was dried in a hot air oven at 80°C until the tackiness of the coating film disappeared to form an anode-side electrode catalyst layer. As a result, the membrane electrode assembly of Example 1B1 was obtained.

### [Example 1B2]

The membrane electrode assembly of Example 1B2 was obtained using the same method as in Example 1B1, except for using a polyazole fiber having a fiber diameter distribution peak of 195 nm.

### [Example 1B3]

The membrane electrode assembly of Example 1B3 was obtained using the same method as in Example 1B1, except for using a polyazole fiber having a fiber diameter distribution peak of 225 nm.

### [Example 1B4]

The membrane electrode assembly of Example 1B4 was obtained using the same method as in Example 1B1, except for using a polyazole fiber having a fiber diameter distribution peak of 215 nm.

### [Example 1B5]

The membrane electrode assembly of Example 1B5 was obtained using the same method as in Example 1B1, except for using a polyazole fiber having a fiber diameter distribution peak of 205 nm.

### [Example 1B6]

The membrane electrode assembly of Example 1B6 was obtained using the same method as in Example 1B1, except for using a polyazole fiber having a fiber diameter distribution peak of 185 nm.

### [Example 1B7]

The catalyst ink was prepared using the same method as in Example 1B6. A coating film was formed by applying the catalyst ink to the surface of a PTFE film using a slit die coater so as to have a thickness of 100 µm. Next, the PTFE film with the coating film formed thereon was dried in a hot air oven at 80°C until the tackiness of the coating film disappeared to obtain a cathode-side electrode catalyst layer-attached transfer substrate. Then, a coating film was formed by applying the catalyst ink to the surface of another PTFE film using a slit die coater so as to have a thickness of 50 µm. Next, the PTFE film with the coating film formed thereon was dried in a hot air oven at 80°C until the tackiness of the coating film disappeared to obtain an anode-side electrode catalyst layer-attached transfer substrate.

A laminate was formed by arranging the cathode-side electrode catalyst layer-attached transfer substrate and the anode-side electrode catalyst layer-attached transfer substrate on the front and rear surfaces of the polymer electrolyte membrane (Nafion (registered trademark) 211, manufactured by Dupont) so as to face each other. Then, the laminate was hot-pressed at 120°C and 1 MPa to join the electrode catalyst layers to the front and rear surfaces of the polymer electrolyte membrane. Finally, the membrane electrode assembly of Example 1B7 was obtained by releasing the PTFE film from each of the electrode catalyst layers.

### [Example 1B8]

The membrane electrode assembly of Example 1B8 was obtained using the same method as in Example 1B1, except for using a polyazole fiber having a fiber diameter distribution peak of 295 nm.

### [Comparative Example 1B1]

The membrane electrode assembly of Comparative Example 1B1 was obtained in the same manner as in Example 1B1, except that the polyazole fiber was not added when preparing the catalyst ink.

### [Comparative Example 1B2]

The membrane electrode assembly of Comparative Example 1B2 was obtained in the same manner as in Example 1B1, except that carbon nanofiber (VGCF (registered trademark) -H, manufactured by Showa Denko Packaging Co., Ltd.) was used instead of the polyazole fiber when preparing the catalyst ink.

### [Measurement of Power Generation Performance]

To measure the power generation performance, a JARI standard cell was used as the evaluation single cell in accordance with the "Cell Evaluation and Analysis Protocol" published by the New Energy and Industrial Technology Development Organization (NEDO), and gas diffusion layers, gaskets, and separators were disposed on the two sides of the membrane electrode assembly and clamped together to provide a predetermined surface pressure. Then, an IV measurement described in the "Cell Evaluation Analysis Protocol" (hereinafter referred to as "standard" conditions) and an I-V measurement with the relative humidity of the anode and the relative humidity of the cathode both set at RH 100% (hereinafter referred to as "high humidity" conditions) were performed.

Note that, in the power generation performance evaluation, those cases where the current was 25 A or more when the voltage was 0.6 V under "standard" conditions, and the current was 30 A or more when the voltage was 0.6 under "high humidity" conditions were rated as "A", and those cases that did not satisfy either of the current values above were rated as "B".

### [Measurement of Durability A and B]

In the durability measurement, the same evaluation single cell as the evaluation single cell used in the measurements of the power generation performance was used. Further, the durability was measured by a humidity cycle test described in "Cell Evaluation Analysis Protocol".

In the durability A evaluation, those cases where the hydrogen cross leak current after 8,000 cycles was less than 10 times the initial value were rated as "A", and those cases where it was 10 times or more were rated as "B". Furthermore, in the durability B evaluation, those cases where the current after 10,000 cycles was 50% or more of the initial value were rated as "A", and those cases where it was less than 50% were rated as "B".

### [Measurement of Fiber Diameter Distribution Peak]

The fiber diameter distribution peak was measured by observing a cross-section of the membrane electrode assembly using a scanning electron microscope (SEM). Specifically, a small piece of the membrane electrode assembly 1 was first adhered to a metal plate, and a cross-section of the electrode catalyst layer was exposed using a cross-section sample preparation device IB-19520CCP manufactured by JEOL Ltd. Next, the exposed cross-section was observed at a magnification of 50,000 times using an FE-SEM S-4800 manufactured by Hitachi High-Technologies Corp., and the fiber diameter of the polymer fiber within the field of view was measured using the circle diameter measurement function. If a fiber was cut at an angle, the diameter of the fitted circle was measured along the short axis. Furthermore, when the surface of the fiber was exposed rather than the cross-section of the fiber, the width of the fiber perpendicular to the long axis of the exposed fiber was measured. This was carried out at a plurality of observation points without bias within the catalyst layer, and a data set of fiber diameters of 30 polymer fibers was obtained. Using this data set, a frequency distribution table was created with a class width of 10 nm, and a histogram representing the fiber diameter distribution was obtained. The central value of the class with the highest frequency in the histogram was obtained as the peak of the fiber diameter distribution of the polymer fibers.

### [Measurement of Nitrogen Atom Ratio in Specific Region of Cross-Section]

The ratio of the number of nitrogen atoms to the total number of atoms of carbon, nitrogen, oxygen, fluorine, sulfur, and platinum obtained by energy-dispersive X-ray spectroscopy on a specific region of the electrode catalyst layer was measured. Specifically, a cross-section of the electrode catalyst layer was first obtained by using cryo-ion milling, which performs processing while cooling the electrode catalyst layer. Then, an elemental mapping of the specific region of the cross-section was performed using a transmission electron microscope equipped with energy-dispersive X-ray spectroscopy (TEM-EDX) to obtain the element ratio of each element, and the nitrogen atom ratio was calculated. The acceleration voltage was set to 200 kV. The specific region was a region with a size of 150 nm × 150 nm, and was a region in which the fibrous material containing nitrogen atoms accounted for 50% or more of the area of the field of view.

### [Comparison Results]

The conditions and results of the Examples and Comparative Examples are shown in Table 1.

**[Table 1]**

| Table 1 | Nitrogen atom ratio [%] | Type of fiber | Fiber diameter distribution peak | Power generation performance | Durability A | Durability B |
|---|---|---|---|---|---|---|
| Example 1A1 | 6 | Polyazole fiber | 210 nm | A | A | A |
| Example 1A2 | 13 | Polyazole fiber | 210 nm | A | A | A |
| Example 1A3 | 2 | Polyazole fiber | 210 nm | A | A | A |
| Comparative Example 1A1 | 0 | Carbon fiber | 150 nm | B | B | B |
| Comparative Example 1A2 | 1 | Polyazole fiber | 210 nm | B | A | B |
| Comparative Example 1A3 | 21 | Polyazole fiber | 210 nm | B | A | B |
| Example 1B1 | 11 | Polyazole fiber | 205 nm | A | A | A |
| Example 1B2 | 15 | Polyazole fiber | 195 nm | A | A | A |
| Example 1B3 | 9 | Polyazole fiber | 225 nm | A | A | A |
| Example 1B4 | 11 | Polyazole fiber | 215 nm | A | A | A |
| Example 1B5 | 11 | Polyazole fiber | 205 nm | A | A | A |
| Example 1B6 | 18 | Polyazole fiber | 185 nm | A | A | A |
| Example 1B7 | 18 | Polyazole fiber | 185 nm | A | A | A |
| Example 1B8 | 5 | Polyazole fiber | 295 nm | A | A | A |
| Comparative Example 1B1 | 0 | None | - | B | B | B |
| Comparative Example 1B2 | 0 | Carbon nanofiber | - | B | B | A |

As shown in Table 1, in each of Examples 1A and 1B, the nitrogen atom ratio in the electrode catalyst layer was 2 wt% or more and 20 wt% or less. Further, the power generation performance and the durability A and B were all rated "A". That is, in Examples 1A and 1B, membrane electrode assembly were obtained that were capable of forming a fuel cell having excellent power generation performance and durability.

On the other hand, in each of Comparative Examples 1A1 to 1A3 and 1B1 to 1B2, the nitrogen atom ratio in the electrode catalyst layer was outside the range of 2 at% or more and 20 at% or less. Further, at least one of the power generation performance and the durability A and B was rated "B". That is, when the nitrogen atom composition ratio in the electrode catalyst layer was outside the above range, at least one of the power generation performance and the durability decreased.

Therefore, it was found that when the nitrogen atom composition ratio in the electrode catalyst layer was 2 at% or more and 20 at% or less, a membrane electrode assembly capable of forming a fuel cell with even better power generation performance can be obtained.

As shown in Table 1, among these, the characteristics were further improved in those Examples in which the fiber diameter distribution peak of the polymer fiber was 150 nm or more and 250 nm or less.

### Second Investigation

Next, the embodiment above according to the second invention group will be described in more detail by way of Examples and Comparative Examples. Note that the present disclosure is not limited to the configurations described under the Examples.

### [Production of Membrane Electrode assembly]

### (Example 2A1)

The catalyst ink was prepared by carrying out dispersion processing with respect to a mixture in which the catalyst supporting particles, the polymer electrolyte, the fibrous material, and the dispersion medium had been mixed. The blending amount of the polymer electrolyte was set to an amount of 70 parts by mass with respect to 100 parts by mass of the blending amount of the support contained in the catalyst supporting particles. The blending amount of the fibrous material was set to an amount of 5 parts by mass with respect to 100 parts by mass of the blending amount of the support contained in the catalyst supporting particles. The blending amount of the dispersion medium was set to an amount in which the solid concentration of the catalyst ink became 10% by mass. The dispersion processing was carried out using zirconia balls having a diameter of 3 mm and a planetary ball mill at a rotation speed of 600 rpm for 60 minutes. The details of each component used in the catalyst ink were as follows.

Catalyst supporting particles: platinum-supported carbon catalyst (support density 50% by mass)
Polymer electrolyte: fluorine-based polymer electrolyte (Nafion (registered trademark) dispersion liquid, manufactured by Wako Pure Chemical Industries, Ltd., containing proton-donating groups, dry weight per mole of proton-donating groups: 1,100 g/mol)
Fibrous material: azole structure-containing high-molecular weight polymer fiber (average fiber diameter 300 nm × average fiber length 10 µm)
Dispersion medium: mixture of water and 1-propanol (mass of water : mass of 1-propanol = 1:1)

Next, the prepared catalyst ink was coated on one side of the polymer electrolyte membrane (Nafion (registered trademark) 211 manufactured by DuPont) using a die coater to form a square coating film measuring 50 mm in length and 50 mm in width. The coating amount of the catalyst ink was set to an amount such that the amount of supported platinum was 0.3 mg/cm2. Then, drying treatment was carried out using an oven at 80°C to volatilize the dispersion medium contained in the coating film, thereby forming the cathode-side electrode catalyst layer.

Next, the prepared catalyst ink was coated on the surface of the polymer electrolyte membrane on the opposite side to the surface on which the cathode-side electrode catalyst layer was formed, thereby forming a square coating film measuring 50 mm in length and 50 mm in width. The coating amount of the catalyst ink was set to an amount such that the amount of supported platinum was 0.1 mg/cm2. Then, the membrane electrode assembly was obtained by carrying out drying treatment using an oven at 80°C to volatilize the dispersion medium contained in the coating film to form the cathode-side electrode catalyst layer.

### (Example 2A2)

Other than setting the blending amount of the fibrous material when preparing the catalyst slurry to an amount of 20 parts by mass with respect to a blending amount of 100 parts by mass of the support contained in the catalyst supporting particles, the membrane electrode assembly was obtained by the same method as in Example 2A1.

### (Comparative Example 2A1)

Other than setting the blending amount of the fibrous material when preparing the catalyst slurry to an amount of 30 parts by mass with respect to a blending amount of 100 parts by mass of the support contained in the catalyst supporting particles, the membrane electrode assembly was obtained by the same method as in Example 2A1.

### (Comparative Example 2A2)

Other than changing the type of the fibrous material, the membrane electrode assembly was obtained by the same method as in Example 2A1. The details of the fibrous material used in Comparative Example 2A2 are as follows.

Fibrous material: non-hydrophilized carbon fiber (VGCF-H (registered trademark) manufactured by Showa Denko Co., Ltd., average fiber length 6 µm, average fiber diameter 150 nm)

### (Comparative Example 2A3)

Other than setting the blending amount of the fibrous material when preparing the catalyst slurry to an amount of 20 parts by mass with respect to a blending amount of 100 parts by mass of the support contained in the catalyst supporting particles, the membrane electrode assembly was obtained by the same method as in Comparative Example 2A2.

### (Comparative Example 2A4)

Other than setting the blending amount of the fibrous material when preparing the catalyst slurry to an amount of 30 parts by mass with respect to a blending amount of 100 parts by mass of the support contained in the catalyst supporting particles, the electrode assembly was obtained by the same method as in Comparative Example 2A2.

### (Example 2B1)

A vessel was charged with 100 mg of the catalyst supporting particles (platinum-supported carbon, product name: "TEC10E50E" manufactured by Tanaka Kikinzoku Kogyo Co., Ltd., platinum amount: 50 mg, carbon amount: 50 mg), and 5 mg of the fibrous material (high-molecular weight polymer fiber containing an azole structure, average fiber diameter 300 nm × average fiber length 10 µm). Then, 1.0 g of water was added to the vessel and mixed, and a dispersion liquid (manufactured by Fuji Film Wako Pure Chemical Industries, Ltd.) was further added to the vessel and stirred. The dispersion liquid contained 1.0 g of 1-propanol and 60 mg of the polymer electrolyte (Nafion (registered trademark), containing proton-donating groups, dry weight per mole of proton-donating groups: 1,100 g/mol). As a result, the catalyst slurry was obtained. The catalyst slurry was applied to both sides of the polymer electrolyte membrane by die coating and then dried to obtain the membrane electrode assembly.

### (Example 2B2)

Other than using a hydrophilic carbon fiber (average fiber diameter 150 nm × average fiber length 30 µm) as the fibrous material when preparing the catalyst slurry, the membrane electrode assembly was obtained by the same method as in Example 2B 1.

### (Example 2B3)

Other than setting the blending amount of the azole structure-containing high-molecular weight polymer fiber to 15 mg when preparing the catalyst slurry, the membrane electrode assembly was obtained by the same method as in Example 2B1.

### (Example 2B4)

Other than setting the blending amount of the azole structure-containing high-molecular weight polymer fiber to 0.5 mg when preparing the catalyst slurry, the membrane electrode assembly was obtained by the same method as in Example 2B1.

### (Example 2B5)

Other than using, as the dispersion liquid when preparing the catalyst slurry, a dispersion liquid containing 1.0 g of 1-propanol and 70 mg of the polymer electrolyte (Nafion (registered trademark), containing proton-donating groups, dry weight per mole of proton-donating groups: 1,300 g/mol), the membrane electrode assembly was obtained by the same method as in Example 2B1.

### (Example 2B6)

Other than using, as the dispersion liquid when preparing the catalyst slurry, a dispersion liquid containing 1.0 g of 1-propanol and 30 mg of the polymer electrolyte (Nafion (registered trademark), containing proton-donating groups, dry weight per mole of proton-donating groups: 500 g/mol), the membrane electrode assembly was obtained by the same method as in Example 2B1.

### (Example 2B7)

Other than setting the average fiber diameter of the fibrous material to 100 nm, and the average fiber length to 0.5 µm, the membrane electrode assembly was obtained by the same method as in Example 2B 1.

### (Example 2B8)

Other than setting the average fiber diameter of the fibrous material to 200 nm, and the average fiber length to 50 µm, the membrane electrode assembly was obtained by the same method as in Example 2B1.

### (Example 2B9)

Other than setting the average fiber diameter of the fibrous material to 5 nm, and the average fiber length to 8 µm, the membrane electrode assembly was obtained by the same method as in Example 2B1.

### (Example 2B10)

Other than setting the average fiber diameter of the fibrous material to 1,000 nm, and the average fiber length to 30 µm, the membrane electrode assembly was obtained by the same method as in Example 2B1.

### (Example 2B11)

To a vessel were added a dispersion liquid (manufactured by Fuji Film Wako Pure Chemical Industries, Ltd.) and 1.0 g of water, and the mixture was stirred. The dispersion liquid contained 5 mg of the fibrous material (high-molecular weight polymer fiber containing an azole structure, average fiber diameter 300 nm × fiber length 10 µm), and 60 mg of the polymer electrolyte (Nafion (registered trademark), containing proton-donating groups, dry weight per mole of proton-donating groups: 1,100). Then, 100 mg of the catalyst supporting particles (platinum-supported carbon, product name "TEC10E50E", manufactured by Tanaka Kikinzoku Kogyo Co., Ltd., platinum amount: 50 mg, carbon amount: 50 mg) and 1.0 g of 1-propanol were added to the vessel and stirred. As a result, the catalyst slurry was obtained. The catalyst slurry was applied to both sides of the polymer electrolyte membrane by die coating and then dried to obtain the membrane electrode assembly.

### (Comparative Example 2B1)

Other than using a water-repellant carbon fiber as the fibrous material, the membrane electrode assembly was obtained by the same method as in Example 2B2.

### (Comparative Example 2B2)

Other than not blending the fibrous material when preparing the catalyst slurry, the membrane electrode assembly was obtained by the same method as in Comparative Example 2B1.

### (Example 2C1)

The catalyst ink was prepared by carrying out dispersion processing with respect to a mixture in which the catalyst supporting particles, the polymer electrolyte, the fibrous material, and the dispersion medium had been mixed. The blending amount of the polymer electrolyte was set to an amount of 80 parts by mass with respect to 100 parts by mass of the blending amount of the support contained in the catalyst supporting particles. The blending amount of the fibrous material was set to an amount of 10 parts by mass with respect to 100 parts by mass of the blending amount of the support contained in the catalyst supporting particles. The blending amount of the dispersion medium was set to an amount in which the solid concentration of the catalyst ink became 12% by mass. The dispersion processing was performed using a bead mill disperser. The details of each component used in the catalyst ink were as follows.

Catalyst supporting particles: platinum-supported carbon particles (product name: "TEC10E50E", manufactured by Tanaka Kinzoku Kogyo Co., Ltd.)
Polymer electrolyte: fluorine-based polymer electrolyte (Nafion (registered trademark) dispersion liquid, manufactured by Wako Pure Chemical Industries, Ltd.)
Fibrous material: high-molecular weight polymer fiber having sulfonic acid groups, average fiber diameter: 300 nm
Dispersion medium: mixture of water and 1-propanol (mass of water : mass of 1-propanol = 1:1)

The membrane electrode assembly was obtained by directly coating the prepared catalyst ink on both surfaces of the polymer electrolyte membrane (Nafion 211 (registered trademark) manufactured by Dupont) using a slit die coater, and then drying the coating to form the electrode catalyst layer.

### (Example 2C2)

Other than using a high-molecular weight polymer fiber (provided with sulfonic acid groups, average fiber diameter: 15 nm) as the fibrous material, the membrane electrode assembly was obtained by the same procedure as in Example 2C1.

### (Example 2C3)

Other than using a high-molecular weight polymer fiber (provided with sulfonic acid groups, average fiber diameter: 0.8 µm) as the fibrous material, the membrane electrode assembly was obtained by the same procedure as in Example 2C1.

### (Example 2C4)

Other than using a high-molecular weight polymer fiber (provided with amino groups, average fiber diameter: 300 nm) as the fibrous material, the membrane electrode assembly was obtained by the same procedure as in Example 2C1.

### (Example 2C5)

Other than using a high-molecular weight polymer fiber (provided with hydroxyl groups, average fiber diameter: 300 nm) as the fibrous material, the membrane electrode assembly was obtained by the same procedure as in Example 2C1.

### (Comparative Example 2C1)

Other than not blending the fibrous material when preparing the catalyst slurry, the membrane electrode assembly was obtained by the same procedure as in Example 2C1.

### (Comparative Example 2C2)

Other than using a high-molecular weight polymer fiber (no Lewis acidic and Lewis basic functional groups, average fiber diameter: 300 nm) as the fibrous material, the membrane electrode assembly was obtained by the same procedure as in Example 2C1.

### (Comparative Example 2C3)

Other than using a high-molecular weight polymer fiber (no Lewis acidic and Lewis basic functional groups, average fiber diameter: 15 nm) as the fibrous material, the membrane electrode assembly was obtained by the same procedure as in Example 2C1.

### (Comparative Example 2C4)

Other than using a high-molecular weight polymer fiber (no Lewis acidic and Lewis basic functional groups, average fiber diameter: 0.8 nm) as the fibrous material, the membrane electrode assembly was obtained by the same procedure as in Example 2C1.

### [Measurement of Amount of Polymer Electrolyte Around Fibrous Material in Electrode Catalyst Layer]

### (Examples 2A1, 2A2, 2B1 to 2B11, Comparative Examples 2A1 to 2A4, 2B1, 2B2)

The ratio of the number of fluorine atoms to the total number of atoms of carbon, nitrogen, oxygen, fluorine, sulfur, and platinum obtained by energy-dispersive X-ray spectroscopy on a specific region of the electrode catalyst layer was measured. Specifically, a cross-section of the electrode catalyst layer was first obtained by using cryo-ion milling, which performs processing while cooling the electrode catalyst layer. Then, an elemental mapping of the specific region of the cross-section was performed using a transmission electron microscope equipped with energy-dispersive X-ray spectroscopy (TEM-EDX) to obtain the element ratio of each element, and the fluorine atom ratio was calculated. The acceleration voltage was set to 200 kV. The specific region was a region with a size of 150 nm × 150 nm, and was a region in which the fibrous material accounted for 50% or more of the area of the field of view.

### [Evaluation of Initial Power Generation Performance]

### (Examples 2A1, 2A2, 2B1 to 2B11, 2C1 to 2C5, Comparative Examples 2A1 to 2A4, 2B1, 2C2 to 2C4)

The samples were prepared by bonding carbon paper serving as gas diffusion layers to the membrane electrode assembly so as to sandwich the membrane electrode assembly. The samples were each set in a power generation evaluation cell, and current and voltage measurement were performed using a fuel cell measurement device. The cell temperature at the time of the measurement was set to 80°C. The humidification conditions were an anode-side relative humidity of 90% RH and a cathode-side relative humidity of 30% RH. Furthermore, hydrogen was used as the fuel gas, and air was used as the oxidant gas. At this time, hydrogen was allowed to flow at a flow rate such that the hydrogen utilization rate was 80%, and air was allowed to flow at a flow rate such that the oxygen utilization rate was 40%. The back pressure was 50 kPa.

The measured power generation performance of each membrane electrode assembly is shown in Tables 2 to 4. In Tables 2 to 4, as an index of the power generation performance at low current density, a voltage of 0.8 V or more at a current density of 0.2 A/cm2 is indicated by "A", and a voltage of less than 0.8 V at the same current density is indicated by "B". Similarly, as an index of the power generation performance at high current density, a voltage of 0.65 V or more at a current density of 1.5 A/cm2 is indicated by "A", and a voltage of less than 0.65 V at the same current density is indicated by "B".

### [Evaluation of Coating State]

### [Examples 2B1 to 2B11, Comparative Example 2B1)

An evaluation was performed to determine whether the fibrous material of the electrode catalyst layer was covered by the coating layer composed of the polymer electrolyte. Specifically, a cross-section of the electrode catalyst layer was first obtained by using cryo-ion milling, which performs processing while cooling the electrode catalyst layer. Then, an elemental mapping of the specific region of the cross-section was performed using a transmission electron microscope equipped with energy-dispersive X-ray spectroscopy (TEM-EDX). The measurement target elements were carbon, nitrogen, oxygen, fluorine, sulfur, and platinum. The acceleration voltage was set to 200 kV. The measurement region was a region with a size of 150 nm × 150 nm, and was a region in which the fibrous material accounted for 50% or more of the area of the field of view. When fluorine was detected in a range within 10 nm from the fibrous material surface, it was determined that the fibrous material was covered by the coating layer composed of the polymer electrolyte. When fluorine was not detected in a range within 10 nm from the fibrous material surface, it was determined that the fibrous material was not covered by the coating layer composed of the polymer electrolyte. Furthermore, the distance from the fluorine detected at the furthest distance from the fibrous material surface to the fibrous material was taken as the thickness of the coating layer. The presence or absence of the coating layer and the thickness was evaluated according to the following evaluation criteria. The results are shown in Table 3.

### <Evaluation Criteria>

D: Does not have a coating layer
C: Has a coating layer, thickness of coating layer is less than 3 nm
B: Has a coating layer, thickness of coating layer is 3 nm or more and less than 10 nm
A: Has a coating layer, thickness of coating layer is 10 nm or more and 30 nm or less

### [Measurement of Adsorption Amount of Polymer Electrolyte]

### (Examples 2C1 to 2C5, Comparative Examples 2C1 to 2C4)

The fibrous material was brought into contact with a dispersion liquid (concentration of polymer electrolyte: 1 wt%) in which the polymer electrolyte had been dispersed. The fibrous material was extracted from the dispersion liquid, and the dispersion liquid was filtered (aperture: 0.4 µm). The concentration of the polymer electrolyte in the filtrate was measured. From the concentration, the amount of the polymer electrolyte adsorbed per gram of the fibrous material was calculated. The results are shown in Table 4.

### [Evaluation of Cracks and Peeling]

### (Examples 2A1, 2A2, 2C1 to 2C5, Comparative Examples 2A1 to 2A4, 2C1 to 2C4)

The presence or absence of cracks and peeling in the electrode catalyst layer was evaluated. In order to check for the presence or absence of cracks, the amount of light transmitted through the electrode catalyst layer was measured. The image obtained by the transmitted light in the measurement range (20 cm2) was binarized, and when a ratio (B/W) of the number of black pixels (B) representing the non-transmitting regions to the number of white pixels (W) representing the transmitting regions was 10,000 or more, it was determined that cracks had occurred, and when the ratio was less than 10,000, it was determined that cracks had not occurred. The peeling between the electrode catalyst layer and the polymer electrolyte membrane was observed by SEM (scanning electron microscope). The results are shown in Tables 2 and 4.

**[Table 2]**

| | Fibrous material | | | | Polymer electrolyte | F atom concentration around fibrous material [at%] | Power generation performance | | | | Cracks | Peeling |
|---|---|---|---|---|---|---|---|---|---|---|---|---|
| | Type | Content [parts by mass] | Average fiber diameter [nm] | Averag e fiber length [µm] | EW [g/mol] | | Voltage (V@0.2 A/cm²) | Rating | Voltage (V@1.5 A/cm²) | Rating | | |
| Example 2A1 | Azole structure-containing high-molecular weight polymer fiber | 5 | 300 | 10 | 1,100 | 0.55 | 0.814 | A | 0.657 | A | No | No |
| Example 2A2 | Azole structure-containing high-molecular weight polymer fiber | 20 | 300 | 10 | 1,100 | 0.20 | 0.805 | A | 0.655 | A | No | No |
| Comparative Example 2A1 | Azole structure-containing high-molecular weight polymer fiber | 30 | 300 | 10 | 1,100 | 0.10 | 0.786 | B | 0.640 | B | No | No |
| Comparative Example 2A2 | Non-hydrophilized carbon fiber | 5 | 150 | 6 | 1,100 | 0.00 | 0.772 | B | 0.637 | B | No | No |
| Comparative Example 2A3 | Non-hydrophilized carbon fiber | 20 | 150 | 6 | 1,100 | 0.00 | 0.755 | B | 0.630 | B | No | No |
| Comparative Example 2A4 | Non-hydrophilized carbon fiber | 30 | 150 | 6 | 1,100 | 0.01 | 0.752 | B | 0.629 | B | No | No |

**[Table 3]**

| | Fibrous material | | | | Polymer electrolyte | F atom concentration around fibrous material [at%] | Power generation performance | | | | Coverage state |
|---|---|---|---|---|---|---|---|---|---|---|---|
| | Type | Content [parts by mass] | Average fiber diameter [nm] | Average fiber length [µm] | EW [g/mol] | | Voltage (V@0.2 A/cm²) | Rating | Voltage (V@1.5 A/cm²) | Rating | |
| Example 2B 1 | Azole structure-containing high-molecular weight polymer fiber | 10 | 300 | 10 | 1,100 | 0.43 | 0.809 | A | 0.661 | A | B |
| Example 2B2 | Hydrophilic carbon fiber | 10 | 150 | 30 | 1,100 | 0.2 | 0.8 | A | 0.65 | A | C |
| Example 2B3 | Azole structure-containing high-molecular weight polymer fiber | 30 | 300 | 10 | 1,100 | 0.24 | 0.805 | A | 0.657 | A | B |
| Example 2B4 | Azole structure-containing high-molecular weight polymer fiber | 1 | 300 | 10 | 1,100 | 0.71 | 0.808 | A | 0.652 | A | B |
| Example 2B5 | Azole structure-containing high-molecular weight polymer fiber | 10 | 300 | 10 | 1,300 | 0.36 | 0.8 | A | 0.658 | A | B |
| Example 2B6 | Azole structure-containing high-molecular weight polymer fiber | 10 | 300 | 10 | 500 | 0.48 | 0.812 | A | 0.65 | A | B |
| Example 2B7 | Azole structure-containing high-molecular weight polymer fiber | 10 | 100 | 0.5 | 1,100 | 0.51 | 0.805 | A | 0.652 | A | B |
| Example 2B8 | Azole structure-containing high-molecular weight polymer fiber | 10 | 200 | 50 | 1,100 | 0.49 | 0.802 | A | 0.655 | A | B |
| Example 2B9 | Azole structure-containing high-molecular weight polymer fiber | 10 | 5 | 8 | 1,100 | 0.67 | 0.8 | A | 0.651 | A | B |
| Example 2B10 | Azole structure-containing high-molecular weight polymer fiber | 10 | 1,000 | 30 | 1,100 | 0.41 | 0.801 | A | 0.654 | A | B |
| Example 2B11 | Azole structure-containing high-molecular weight polymer fiber | 10 | 300 | 10 | 1,100 | 0.8 | 0.803 | A | 0.65 | A | A |
| Comparative Example 2B 1 | Water-repellent carbon fiber | 10 | 150 | 30 | 1,100 | 0.01 | 0.763 | B | 0.641 | B | D |
| Comparative Example 2B2 | - | 0 | - | - | 1,100 | - | 0.792 | B | 0.616 | B | - |

**[Table 4]**

| | Fibrous material | | | F atom concentration around fibrous material [at%] | Power generation performance | | | | Adsorption amount [mg] | Cracks | Peeling |
|---|---|---|---|---|---|---|---|---|---|---|---|
| | Type | Conten t [parts by mass] | Average fiber diameter [nm] | | Voltage (V@0.2 A/cm²) | Rating | Voltage (V@1.5 A/cm²) | Rating | | | |
| Example 2C1 | Sulfonic acid-containing polymer fiber | 10 | 300 | 0.48 | 0.808 | A | 0.654 | A | 10 mg or more | No | No |
| Example 2C2 | Sulfonic acid-containing polymer fiber | 10 | 15 | 0.57 | 0.812 | A | 0.653 | A | 10 mg or more | No | No |
| Example 2C3 | Sulfonic acid-containing polymer fiber | 10 | 800 | 0.39 | 0.805 | A | 0.656 | A | 10 mg or more | No | No |
| Example 2C4 | Amino group-containing polymer fiber | 10 | 300 | 0.26 | 0.807 | A | 0.654 | A | 10 mg or more | No | No |
| Example 2C5 | Hydroxyl group-containing polymer fiber | 10 | 300 | 0.24 | 0.811 | A | 0.653 | A | 10 mg or more | No | No |
| Comparativ | - | 0 | - | - | 0.748 | B | 0.547 | B | Less than 10 mg | Yes | Yes |
| e Example 2C1 | | | | | | | | | | | |
| Comparativ e Example 2C2 | Polymer fiber not containing cation exchange group | 10 | 300 | 0.01 | 0.773 | B | 0.631 | B | Less than 10 mg | Yes | Yes |
| Comparativ e Example 2C3 | Polymer fiber not containing cation exchange group | 10 | 15 | 0.01 | 0.762 | B | 0.636 | B | Less than 10 mg | Yes | Yes |
| Comparativ e Example 2C4 | Polymer fiber not containing cation exchange group | 10 | 800 | 0.01 | 0.765 | B | 0.642 | B | Less than 10 mg | Yes | Yes |

From the results of the Examples and Comparative Examples, it could be seen that even when the added amount of the fibrous material is the same, if the amount of the polymer electrolyte containing fluorine atoms around the fibrous material is low, power generation performance cannot be obtained. The inventors surmise that the mechanism by which the membrane electrode assembly obtained in each Example is provided with excellent initial power generation performance from low current density to high current density is as follows. That is, in order to obtain structural strength in the electrode catalyst layer, a portion of the polymer electrolyte is adsorbed around the fibrous material that constructs a three-dimensional network in the electrode catalyst layer. As a result, proton conductive pathways are constructed in three-dimensions. This leads to improved initial power generation performance from low current density to high current density.

From the description above, it has been shown that in the present embodiment, in an electrode catalyst layer containing a fibrous material, the presence of a certain amount or more of the polymer electrolyte around the fibrous material can improve the initial power generation performance from the low current density region to the high current density region.

The gist of the present disclosure belongs to [1] to [12] below.
[1] An electrode catalyst layer that is joined to a polymer electrolyte membrane, comprising:
   a catalyst;
   a polymer electrolyte containing fluorine; and
   a fibrous material; wherein
   a ratio of the number of fluorine atoms to a total number of atoms of carbon, nitrogen, oxygen, fluorine, sulfur, and platinum obtained by energy-dispersive X-ray spectroscopy on a specific region of a cross-section of the electrode catalyst layer is 0.2 at% or more, and
   the specific region is a region containing 50 area% or more of the fibrous material, and does not contain the catalyst.
[2] The electrode catalyst layer according to [1], wherein the fibrous material has an azole structure.
[3] The electrode catalyst layer according to [1] or [2], comprising
   a support that supports the catalyst and constitutes catalyst supporting particles together with the catalyst, wherein
   a content of the fibrous material is 5 parts by mass or more and 20 parts by mass or less when a content of the carrier is 100 parts by mass, and
   the specific region is a region that does not contain the support.
[4] The electrode catalyst layer according to any one of [1] to [3], wherein the polymer electrolyte covers at least a portion of a surface of the fibrous material.
[5] The electrode catalyst layer according to [4], wherein a thickness of the polymer electrolyte covering the fibrous material is 3 nm or more and 30 nm or less.
[6] The electrode catalyst layer according to any one of [1] to [5], wherein
   the polymer electrolyte contains proton-donating groups, and
   a dry weight per mole of the proton-donating groups of the polymer electrolyte is 600 g/mol or more and 1,200 g/mol or less.
[7] The electrode catalyst layer according to any one of [1] to [6], wherein an average fiber length of the fibrous material is 0.7 µm or more and 40 µm or less.
[8] The electrode catalyst layer according to any one of [1] to [7], wherein an average fiber diameter of the fibrous material is 10 nm or more and 500 nm or less.
[9] The electrode catalyst layer according to any one of [1] to [8], wherein the fibrous material has a property of adsorbing the polymer electrolyte.
[10] The electrode catalyst layer according to [9], wherein an adsorption capacity of the fibrous material for the polymer electrolyte is 10 mg/g or more.
[11] A membrane electrode assembly comprising:
   a polymer electrolyte membrane; and
   an electrode catalyst layer according to any one of [1] to [10]; wherein
   the electrode catalyst layer is joined to the polymer electrolyte membrane.
[12] A polymer electrolyte fuel cell comprising:
   the membrane electrode assembly according to [11];
   a pair of gas diffusion layers that sandwich the membrane electrode assembly in a thickness direction of the membrane electrode assembly; and
   a pair of separators that sandwich the membrane electrode assembly and the pair of gas diffusion layers in the thickness direction of the membrane electrode assembly.

### [Reference Signs List]

1, 100 ... Membrane electrode assembly,
2C ... Oxygen electrode,
2A ... Fuel electrode,
3, 30 ... polymer electrolyte fuel cell,
4 ... Void,
10, 10C, 10A ... Electrode catalyst layer,
11 ... Polymer electrolyte membrane,
12 ... Catalyst material,
12C ... Cathode-side electrode catalyst layer,
12A ... Anode-side electrode catalyst layer,
13 ... Conductive carrier,
14 ... Polymer electrolyte,
15 ... Fibrous material containing nitrogen atoms,
16C, 16A ... Gasket,
17C, 17A, 31a, 31b ... Gas diffusion layer,
18C, 18A, 32a, 32b ... Separator,
19C, 19A, 33a, 33b ... Gas flow path,
20C, 20A, 34a, 34b ... Cooling water flow path,
20 ... First electrode catalyst layer,
21 ... Catalyst supporting particle,
21a ... Catalyst,
21b ... Carrier,
22 ... Polymer electrolyte,
23 ... Fibrous material.

## Claims

1. An electrode catalyst layer that is used in a polymer electrolyte fuel cell, the electrode catalyst layer comprising: a catalyst material; a conductive support that supports the catalyst material; a polymer electrolyte; and a fibrous material containing nitrogen atoms; wherein
a ratio of the number of nitrogen atoms to a total number of atoms of carbon, nitrogen, oxygen, fluorine, sulfur, and platinum obtained by energy-dispersive X-ray spectroscopy on a specific region of a cross-section of the electrode catalyst layer is 2 at% or more and 20 at% or less, and the specific region is a region containing 50 area% or more of the fibrous material containing nitrogen atoms accounts, and does not contain the catalyst material or the conductive carrier.

2. The electrode catalyst layer according to claim 1, wherein an average fiber diameter of the fibrous material containing nitrogen atoms is 50 nm or more and 400 nm or less.

3. The electrode catalyst layer according to claim 1 or 2, wherein the fibrous material containing nitrogen atoms is a polymer fiber.

4. The electrode catalyst layer according to claim 3, wherein the fibrous material containing nitrogen atoms has an azole structure.

5. The electrode catalyst layer according to any one of claims 1 to 4, wherein a peak of a fiber diameter distribution of the fibrous material containing nitrogen atoms is 150 nm or more and 250 nm or less.

6. The electrode catalyst layer according to any one of claims 1 to 5, wherein a content of the fibrous material containing nitrogen atoms in the electrode catalyst layer is 1 wt% or more and 10 wt% or less.

7. The electrode catalyst layer according to any one of claims 1 to 6, wherein a thickness of the electrode catalyst layer is 2 µm or more and 10 µm or less.

8. A membrane electrode assembly comprising an electrode catalyst layer according to any one of claims 1 to 7 provided on at least one side of a polymer electrolyte membrane.

9. A polymer electrolyte fuel cell comprising the membrane electrode assembly according to claim 8.

10. An electrode catalyst layer that is joined to a polymer electrolyte membrane, the electrode catalyst layer comprising:
a catalyst;
a polymer electrolyte containing fluorine; and
a fibrous material; wherein
a ratio of the number of fluorine atoms to a total number of atoms of carbon, nitrogen, oxygen, fluorine, sulfur, and platinum obtained by energy-dispersive X-ray spectroscopy on a specific region of a cross-section of the electrode catalyst layer is 0.2 at% or more, and
the specific region is a region containing 50 area% or more of the fibrous material, and does not contain the catalyst.

11. The electrode catalyst layer according to claim 10, wherein the fibrous material has an azole structure.

12. The electrode catalyst layer according to claim 10 or 11, comprising
a carrier that supports the catalyst and constitutes catalyst supporting particles together with the catalyst, wherein
a content of the fibrous material is 5 parts by mass or more and 20 parts by mass or less when a content of the carrier is 100 parts by mass, and
the specific region is a region that does not contain the carrier.

13. The electrode catalyst layer according to any one of claims 10 to 12, wherein the polymer electrolyte covers at least a portion of a surface of the fibrous material.

14. The electrode catalyst layer according to claim 13, wherein a thickness of the polymer electrolyte covering the fibrous material is 3 nm or more and 30 nm or less.

15. The electrode catalyst layer according to any one of claims 10 to 14, wherein
the polymer electrolyte contains proton-donating groups, and
a dry weight per mole of the proton-donating groups of the polymer electrolyte is 600 g/mol or more and 1,200 g/mol or less.

16. The electrode catalyst layer according to any one of claims 10 to 15, wherein an average fiber length of the fibrous material is 0.7 µm or more and 40 µm or less.

17. The electrode catalyst layer according to any one of claims 10 to 16, wherein an average fiber diameter of the fibrous material is 10 nm or more and 500 nm or less.

18. The electrode catalyst layer according to any one of claims 10 to 17, wherein the fibrous material has a property of adsorbing the polymer electrolyte.

19. The electrode catalyst layer according to claim 18, wherein an adsorption capacity of the fibrous material for the polymer electrolyte is 10 mg/g or more.

20. A membrane electrode assembly comprising:
a polymer electrolyte membrane; and
an electrode catalyst layer according to any one of claims 10 to 19; wherein
the electrode catalyst layer is joined to the polymer electrolyte membrane.

21. A polymer electrolyte fuel cell comprising:
the membrane electrode assembly according to claim 20;
a pair of gas diffusion layers that sandwich the membrane electrode assembly in a thickness direction of the membrane electrode assembly; and
a pair of separators that sandwich the membrane electrode assembly and the pair of gas diffusion layers in the thickness direction of the membrane electrode assembly.
